# EUROPÄISCHE PATENTSCHRIFT

(11) **EP 4 070 530 B1**
(45) Veröffentlichungstag und Bekanntmachung des Hinweises auf die Patenterteilung: **02.08.2023**
(21) Anmeldenummer: 20824221.4
(22) Anmeldetag: 11.12.2020
(51) Int. Cl.: H04L 67/12, H04L 1/00, H04L 1/18

(54) **VERFAHREN ZUM ZYKLISCHEN ÜBERTRAGEN VON DATEN ZWISCHEN KOMMUNIKATIONSTEILNEHMERN AUF EINEM DATENÜBERTRAGUNGSKANAL UND DATENÜBERTRAGUNGSSYSTEM**
METHOD FOR CYCLICALLY TRANSMITTING DATA BETWEEN COMMUNICATION SUBSCRIBERS ON A DATA TRANSMISSION CHANNEL, AND DATA TRANSMISSION SYSTEM
PROCÉDÉ DE TRANSMISSION CYCLIQUE DE DONNÉES ENTRE DES ABONNÉS DE COMMUNICATION SUR UN CANAL DE TRANSMISSION DE DONNÉES ET SYSTÈME DE TRANSMISSION DE DONNÉES

(30) Priorität: 11.12.2019 DE 102019133894
(43) Veröffentlichungstag der Anmeldung: 12.10.2022
(73) Patentinhaber: Beckhoff Automation GmbH, 33415 Verl (DE)
(72) Erfinder: BÜTTNER, Holger, 12205 Berlin (DE); SCHLOTTHAUER, Daniel, 13127 Berlin (DE); PETERS, Marcel, 12679 Berlin (DE)
(74) Vertreter: Patentanwaltskanzlei WILHELM & BECK
(86) Internationale Anmeldenummer: PCT/EP2020/085788
(87) Internationale Veröffentlichungsnummer: WO 2021/116424

(56) Entgegenhaltungen:
- EP-A1- 1 179 908
- EP-A1- 2 575 280
- WO-A1-2019/166079
- US-A1- 2003 032 439
- US-A1- 2006 215 563

## Beschreibung

In der Fertigungs- und Prozessautomatisierung kommunizieren dezentral angeordnete Geräte einer Maschinenperipherie wie E/A-Module, Messumformer, Antriebe, Ventile und Bedienerterminals über ein leistungsfähiges Echtzeit-Kommunikationsnetzwerk mit Steuereinrichtungen. Alle Geräte, im Weiteren auch als Kommunikationsteilnehmer bezeichnet, sind dabei über einen Datenübertragungskanal, vorzugsweise einen Feldbus, miteinander verbunden, wobei der Datenaustausch meistens auf der Grundlage des Master-Slave-Prinzip ausgeführt wird.

Die Patentanmeldung beansprucht die Priorität der deutschen Patentanmeldung 10 2019 133 894.8, deren Offenbarungsgehalt hiermit durch Rückbezug aufgenommen wird.

Die aktiven Kommunikationsteilnehmer am Feldbus sind die Steuereinrichtungen. Sie sind im Besitz einer Buszugriffsberechtigung und bestimmen den Datentransfer. Die aktiven Kommunikationsteilnehmer werden auch als Master-Teilnehmer bezeichnet. Die passiven Kommunikationsteilnehmer sind in der Regel die Maschinenperipherie-Geräte. Sie haben keine Buszugriffsberechtigung und dürfen nur empfangene Daten quittieren oder auf Anfrage eines Master-Teilnehmers Daten an diesen übermitteln. Die passiven Kommunikationsteilnehmer werden auch als Slave-Teilnehmer bezeichnet.

Steuerungsprozesse in der Fertigungs- und Prozessautomatisierung setzen sich in der Regel aus zyklisch auszuführenden Aufgaben zusammen. Diese Aufgaben werden so ausgeführt, dass die Slave-Teilnehmer, die die Maschinenperipherie bilden, Eingangsprozessdaten über den Feldbus an den Master-Teilnehmer, der die Prozesssteuerung durchführt, liefern. Im Master-Teilnehmer werden dann entsprechend der ausführenden Aufgabe Ausgangsprozessdaten erzeugt und über den Feldbus an die Slave-Teilnehmer zurück übertragen.

Die Daten werden üblicherweise zwischen den Kommunikationsteilnehmern in Form von diskreten Datenpaketen ausgetauscht, die im Weiteren auch als Telegramme bezeichnet werden. Der Telegrammaufbau erfolgt dabei in der Regel nach dem Ethernet-Standard.

In der Praxis tritt häufig das Problem auf, dass ein Telegramm nicht korrekt von einem Kommunikationsteilnehmer zu einem anderen Kommunikationsteilnehmer übermittelt wird. Mögliche Ursachen können eine Störung im sendenden Kommunikationsteilnehmer, eine kurzzeitige Unterbrechung des Datenübertragungskanals sowie eine Störung im empfangenden Kommunikationsteilnehmer sein. Ein Verlust von Daten kann aber zu Fehlern bei der Ausführung der Steuerungsaufgabe führen.

Um Störungen in der Datenübertragung zu begegnen, kann das Feldbussystem fehlerhaft übertragene Telegramme wiederholen. Das kann so realisiert sein, dass der Master-Teilnehmer ein Telegramm an einen Slave-Teilnehmer aussendet und dann auf ein Antworttelegramm wartet. Der Slave-Teilnehmer kann dabei mit einem separaten Telegramm antworten oder auch mit demselben Telegramm, wenn der Slave-Teilnehmer die Telegramme im Durchlauf verarbeitet. Falls der Master-Teilnehmer innerhalb einer festgelegten Zeit keine Antwort erhält, sendet er das ursprünglich ausgesandte Telegramm nochmals. Ein solches Verfahren ist beispielsweise in der DE 10 2016 121 019 A1 beschrieben, bei dem ein Master-Teilnehmer ein bereits gesendetes Telegramm ein zweites Mal verschickt, wenn der Empfang des ersten gesendeten Telegramms nicht vom Slave-Teilnehmer quittiert wurde. Eine weitere Realisierungsmöglichkeit besteht darin, dass der Master-Teilnehmer anstelle eines einzelnen Telegramms eine Telegrammfolge versendet, die mehrere, im Wesentlichen inhaltsgleiche Telegramme umfasst. Zur erfolgreichen Übermittlung genügt es dann, dass der Slave-Teilnehmer wenigstens eines der Telegramme aus der Telegrammwiederholungsfolge empfängt. Ein solches Verfahren ist beispielsweise in der DE 10 2015 117 937 A1 beschrieben.

Wenn der Kommunikationsteilnehmer in Reaktion auf den erfolgreichen Empfang eines Telegramms eine bestimmte Aktion auszulösen hat, so hängt der Zeitpunkt der Ausführung der Aktion davon ab, wann bei einer Telegrammwiederholung im Fehlerfall das Wiederhol-Telegramm empfangen wird bzw. auf welches Telegramm einer Telegrammfolge der Kommunikationsteilnehmer reagiert. Dies kann insbesondere dann problematisch sein, wenn mehrere Kommunikationsteilnehmer im Feldbussystem synchron betrieben werden sollen.

In der US 7,373,578 B2 und in der EP 1 179 908 A1 ist ein Verfahren zur verlustfreien Datenübertragung mit einer Telegrammwiederholung beschrieben, bei dem die Telegrammwiederholung bei einer gestörten Kommunikation auf den nächsten Kommunikationszyklus verschoben wird, so dass die Bandbreite des Kommunikationszyklus konstant bleibt. Mit dieser Vorgehensweise kann aber nicht gewährleistet werden, dass der Empfänger in jedem Kommunikationszyklus aktuelle Daten erhält.

Es ist die Aufgabe der Erfindung, eine verlustfreie zyklische Übertragung von Daten zwischen Kommunikationsteilnehmern auf einem Datenübertragungskanal zu ermöglichen.

Diese Aufgabe wird mit einem Verfahren gemäß Anspruch 1 und einem Datenübertragungssystem gemäß Anspruch 8 gelöst. Bevorzugte Weiterbildungen sind in den abhängigen Ansprüchen angegeben.

In einem Datenübertragungssystem werden Daten zwischen Kommunikationsteilnehmern zyklisch auf einem Datenübertragungskanal übertragen, der mit einer Datenübertragungsrate betrieben wird, mit der in jedem Übertragungszyklus eine erste Datenmenge übertragbar ist. Dabei wirkt ein Kommunikationsteilnehmer als Daten-Verarbeiter und ein weiterer Kommunikationsteilnehmer als Daten-Erzeuger. Der Daten-Erzeuger stellt für jeden Übertragungszyklus eine zweite Datenmenge zur Verfügung. Die erste Datenmenge übersteigt die zweite Datenmenge um einen prozentualen Anteil. Der Daten-Erzeuger überträgt die vom Daten-Erzeuger zur Verfügung gestellten Daten mit der Datenübertragungsrate des Datenübertragungskanals zum Daten-Verarbeiter. Der Daten-Verarbeiter verarbeitet die vom Daten-Erzeuger auf dem Datenübertragungskanal empfangenen Daten um die Anzahl von Übertragungszyklen verzögert, die der Daten-Erzeuger braucht, um auf ein Kommando des Daten-Verarbeiters zu reagieren. Der Daten-Verarbeiter zeigt dem Daten-Erzeuger mit einem Wiederwohl-Kommando einen Übertragungszyklus als fehlerhaft an, wenn ein Fehler bei der Datenübertragung in dem Übertragungszyklus aufgetreten ist, wobei der Daten-Erzeuger bei Empfang des Wiederhol-Kommandos die Datenübertragung der Daten des vom Daten-Verarbeiter als fehlerhaft angezeigten Übertragungszyklus wiederholt.

Die erste Datenmenge zeigt an, viele Daten pro Übertragungszyklus übertragen werden können. Pro Übertragungszyklus vom Daten-Erzeuger erzeugt wird die zweite Datenmenge. Die erzeugten zweiten Datenmengen werden dann mit Datenpaketen übertragen, die die Größe der ersten Datenmenge haben können, also größer sind als die zweite Datenmenge, so dass mit einem übertragenen Datenpaket in einem Übertragungszyklus mehr als die zweite Datenmenge übertragen werden kann. Damit wird in jedem Kommunikationszyklus ein redundanter Übertragungszyklus bereitgestellt, der zur Wiederholung einer fehlerhaften Datenübertragung genutzt werden kann.

Mit dieser Vorgehensweise werden Daten ohne Verlust übertragen. Weiterhin bleibt die für jeden Kommunikationszyklus benötigte Bandbreite auch bei einer Wiederholung einer Datenübertragung eines Übertragungszyklus konstant. Ferner wird sichergestellt, dass der Daten-Verarbeiter in jedem Kommunikationszyklus neue Daten erhält. Die Totzeit, um die der Daten-Verarbeiter verzögert mit der Verarbeitung der vom Daten-Erzeuger auf dem Datenübertragungskanal empfangenen Daten beginnt, kann möglichst kurz bleiben und genau auf die Anzahl von Übertragungszyklen abgestimmt werden, die der Daten-Erzeuger braucht, um auf ein Kommando des Daten-Verarbeiters zu reagieren.

Der prozentuale Anteil, um den die erste Datenmenge die zweite Datenmenge übersteigt, kann n-fach multipliziert der zweiten Datenmenge entsprechen, wobei n eine ganze Zahl grö-ßer 1 ist. Der Daten-Verarbeiter verwirft dann die in einem Übertragungszyklus vom Daten-Erzeuger empfangenen Daten, wenn der Daten-Erzeuger in dem Übertragungszyklus weniger als die erste Datenmenge überträgt. Mit dieser Vorgehensweise kann auf einfache Weise sichergestellt werden, dass der Daten-Verarbeiter in jedem Kommunikationszyklus neue Daten erhält und gleichzeitig ein redundanter Übertragungszyklus für eine mögliche Wiederholung einer fehlerhaften Datenübertragung bereitgestellt wird.

Der Daten-Verarbeiter kann so ausgelegt sein, in jedem Übertragungszyklus jeweils eine Verarbeiter-Dateneinheit zu versenden, auf die der Daten-Erzeuger im jeweiligen Übertragungszyklus mit einer Erzeuger-Dateneinheit antwortet, wobei die Verarbeiter-Dateneinheit ein Datenelement enthält, mit dem das Wiederhol-Kommando übertragen wird. Wenn das im Datenübertragungssystem eingesetzte Protokoll eine Datenverarbeitung im Durchlauf ermöglicht, kann mit einem einzelnen Telegramm in einem Übertragungszyklus sowohl die Verarbeiter-Dateneinheit als auch die Erzeuger-Dateneinheit übertragen werden. Das Feldbus-Protokoll EtherCAT ermöglicht eine solche Datenverarbeitung im Durchlauf. Alternativ besteht auch die Möglichkeit, die Verarbeiter-Dateneinheit als auch die Erzeuger-Dateneinheit in einem Übertragungszyklus mit Hilfe eines separaten Telegramms zu versenden. Die Datenübertragung mit einer Verarbeiter-Dateneinheit und einer Erzeuger-Dateneinheit in einem Übertragungszyklus gibt somit maximale Flexibilität bei der Auslegung der Datenübertragungssystems.

Im Rahmen einer Initialisierungssequenz kann die Totzeit, die der Anzahl von Übertragungszyklen entspricht, die der Daten-Erzeuger braucht, um auf ein Kommando des Daten-Verarbeiters zu reagieren, ermittelt werden. Der Übertragungszyklus ist dabei dann ausgelegt, in aufeinanderfolgenden Verarbeiter-Dateneinheiten der Initialisierungssequenz eine Datenwertfolge bereitzustellen, bei der jedem Übertragungszyklus der Initialisierungssequenz ein individueller Datenwert zugeordnet ist, wobei der Daten-Erzeuger den Datenwert nach dem Erfassen in die nächste an den Daten-Verarbeiter versandte Erzeuger-Dateneinheit einträgt. Mit dieser Vorgehensweise kann einfach und zuverlässig die Totzeit ermittelt werden, die die im Daten-Verarbeiter eingestellte Verzögerung für die Verarbeitung von Nutzdaten des Daten-Erzeugers bestimmt.

Der Daten-Verarbeiter kann ausgelegt sein, in die Verarbeiter-Dateneinheit ein Datenelement einzutragen, mit dem ein Betriebsstatus-Kommando übertragen wird, das anzeigt, dass der Übertragungszyklus Teil einer Initialisierungssequenz oder Teil einer Datenübertragungssequenz ist. Der Daten-Verarbeiter kann weiter so ausgelegt sein, in die Verarbeiter-Dateneinheit ein Datenelement einzutragen, mit dem ein Daten-Kommando übertragen wird, mit dem die vom Daten-Erzeuger in einem Übertragungszyklus erzeugte zweite Datenmenge veränderbar ist. Der Daten-Erzeuger kann so ausgelegt sein, in die Erzeuger-Dateneinheit ein Datenelement einzutragen, mit dem ein Übertragungsstatus-Kommando übertragen wird, das anzeigt, ob die in der Erzeuger-Dateneinheit für Nutzdaten vorgesehenen Datenelemente vollständig mit Nutzdaten belegt sind. Alternativ kann der Daten-Erzeuger so ausgelegt sein, in die Erzeuger-Dateneinheit ein Datenelement einzutragen, mit dem ein Übertragungsstatus-Kommando übertragen wird, das in der Erzeuger-Dateneinheit die Anzahl der mit Nutzdaten belegten Datenelemente anzeigt.

Mit einer solchen Auslegung der Verarbeiter-Dateneinheit bzw. der Erzeuger-Dateneinheit kann auf einfache Weise in jedem Kommunikationszyklus in einem redundanten Übertragungszyklus eine Wiederholung bei einer fehlerhaften Datenübertragung in einem der anderen Übertragungszyklen ausgeführt werden.

Im Datenübertragungssystem kann der Daten-Erzeuger einen Zwischenspeicher zum Aufnehmen der erzeugten zweiten Datenmenge in Form eines Ringspeichers aufweisen. Bei dem Ringspeicher kann die zweiten Datenmenge für aufeinanderfolgende Übertragungszyklen hintereinander gespeichert und einfach adressiert werden. In Bezug auf die Kommunikationszykluszeit und die Speichergröße des Ringspeichers ist zu beachten, dass keine Daten im Ringspeicher überschrieben werden, die noch nicht vom Daten-Erzeuger zum Daten-Verarbeiter übertragen worden sind.

Die Erfindung wird im Folgenden anhand von bevorzugten Ausführungsformen näher erläutert.
Fig. 1 zeigt in seiner allgemeinsten Form den Aufbau eines Datenübertragungssystems zum zyklischen Übertragen von Daten zwischen zwei Kommunikationsteilnehmern auf einem Datenübertragungskanal, wobei der eine Kommunikationsteilnehmer als Daten-Verarbeiter und der andere Kommunikationsteilnehmer als Daten-Erzeuger fungiert.
Fig. 2 zeigt eine Ausgestaltung eines Zwischenspeichers für den Daten-Erzeuger im Datenübertragungssystem nach Fig. 1 in Form eines Ringspeichers.
Fig. 3 zeigt eine erste Abfolge für ein zyklisches Übertragen von Nutzdaten zwischen dem Daten-Verarbeiter und dem Daten-Erzeuger im Datenübertragungssystem nach Fig. 1.
Fig. 4 zeigt eine zweite Abfolge für ein zyklisches Übertragen von Nutzdaten zwischen dem Daten-Verarbeiter und dem Daten-Erzeuger im Datenübertragungssystem nach Fig. 1.
Fig. 5 zeigt eine dritte Abfolge für ein zyklisches Übertragen von Nutzdaten zwischen dem Daten-Verarbeiter und dem Daten-Erzeuger im Datenübertragungssystem nach Fig. 1.

Das Datenübertragungssystem zum zyklischen Übertragen von Daten zwischen Kommunikationsteilnehmern auf einem Datenübertragungskanal wird für Anwendungen im Bereich der Automationstechnik, d.h. der Steuerung und Überwachung von technischen Prozessen mit Hilfe von Software, erläutert, ist aber nicht auf eine solche Anwendung beschränkt.

In der Fertigungs- und Prozessautomatisierung kommuniziert Steuerungseinrichtungen mit einer verteilten Sensor-/Aktor-Ebene über ein lokales Kommunikationsnetzwerk. Die eingesetzten Kommunikationsnetzwerke sind Feldbussystem und können in unterschiedlicher Topologie, z.B. als Ring-, Stern-, Linien- oder Baumtopologie ausgeführt sein.

Bei Feldbussystem wird in der Regel zwischen aktiven und passiven Kommunikationsteilnehmern unterschieden. Die aktiven Kommunikationsteilnehmer am Feldbussystem sind die Steuerungseinrichtungen, die als Master-Teilnehmer den Datenverkehr bestimmen. Die Master-Teilnehmer besitzen eine Zugriffsberechtigung auf den Datenübertragungskanal und können so selbständig Daten auf den Datenübertragungskanal ausgeben. Die passiven Kommunikationsteilnehmer am Feldbussystem sind die Sensoren und Aktoren, die als Slave-Teilnehmer Daten empfangen oder nach Aufforderung durch einen Master-Teilnehmer Daten an diesen übermitteln dürfen.

Die Programme, die technischen Prozesse steuern, überwachen und regeln, weisen im Allgemeinen mehreren Steuerungsaufgaben auf, die jeweils über Eingangs- und Ausgangsprozessabbilder verfügen. Die Prozessdaten sind den Sensoren und Aktoren, d.h. den Slave-Teilnehmern zugeordnet, die die Schnittstellen zum Prozess bilden. Die Eingangsprozessdaten werden von den Steuereinrichtungen, d.h. den Master-Teilnehmern am Feldbus über den Datenübertragungskanal von den Sensoren angefordert, nach Empfang von den Steuereinrichtungen auf der Grundlage der Steuerungsaufgaben verarbeiten, um dann als die Ausgangprozessdaten über den Datenübertragungskanal an die Aktoren übertragen zu werden.

Der Prozessdatenaustausch auf dem Datenübertragungskanal erfolgt im Allgemeinen in Form von diskreten Datenpaketen, im Weiteren auch als Telegramme bezeichnet, die in der Regel zyklisch übertragen werden. Der Telegrammaufbau basiert dabei üblicherweise auf dem Ethernet-Standard, wobei das auf dem Feldbus verwendete Übertragungsprotokoll vorzugsweise eine Echtzeitübertragung mit geringem Jitter garantiert.

Um Daten ohne Verlust zu übertragen und weiterhin die für jeden Kommunikationszyklus benötigte Bandbreite auch bei einer Wiederholung einer Datenübertragung eines Übertragungszyklus konstant zu halten, wird in folgender Weise vorgegangen:
In einem Datenübertragungssystem werden Daten zyklisch auf einem Datenübertragungskanal übertragen, der mit einer Datenübertragungsrate betrieben wird, mit der in jedem Übertragungszyklus eine erste Datenmenge übertragbar ist. Ein Daten-Erzeuger stellt weiterhin für jeden Übertragungszyklus eine zweite Datenmenge zur Verfügung, wobei die erste Datenmenge die zweite Datenmenge um einen prozentualen Anteil übersteigt.

Der Daten-Erzeuger überträgt die vom Daten-Erzeuger zur Verfügung gestellten Daten mit der Datenübertragungsrate des Datenübertragungskanals zu einem Daten-Verarbeiter. Der Daten-Verarbeiter verarbeitet die vom Daten-Erzeuger auf dem Datenübertragungskanal empfangenen Daten um die Anzahl von Übertragungszyklen verzögert, die der Daten-Erzeuger braucht, um auf ein Kommando des Daten-Verarbeiters zu reagieren.

Wenn ein Fehler bei der Datenübertragung in dem Übertragungszyklus aufgetreten ist, zeigt der Daten-Verarbeiter dem Daten-Erzeuger mit einem Wiederhol-Kommando einen Übertragungszyklus als fehlerhaft an, wobei der Daten-Erzeuger bei Empfang des Wiederhol-Kommandos die Datenübertragung der Daten des vom Daten-Verarbeiter als fehlerhaft angezeigten Übertragungszyklus wiederholt.

Der prozentuale Anteil, um den die erste Datenmenge die zweite Datenmenge übersteigt, kann n-fach multipliziert der zweiten Datenmenge entsprechen, wobei n eine ganze Zahl grö-ßer 1 ist. Der Daten-Verarbeiter verwirft dann die in einem Übertragungszyklus vom Daten-Erzeuger empfangenen Daten, wenn der Daten-Erzeuger in dem Übertragungszyklus weniger als die erste Datenmenge überträgt. Mit dieser Vorgehensweise kann auf einfache Weise sichergestellt werden, dass der Daten-Verarbeiter in jedem Kommunikationszyklus neue Daten erhält und gleichzeitig ein redundanter Übertragungszyklus für eine mögliche Wiederholung einer fehlerhaften Datenübertragung bereitgestellt wird.

Es ist jedoch grundsätzlich nicht notwendig, dass der prozentuale Anteil, um den die erste Datenmenge die zweite Datenmenge übersteigt, n-fach multipliziert genau der zweiten Datenmenge entspricht. Der Daten-Verarbeiter kann dann so ausgelegt sein, dass, wenn Daten mehrfach empfangen werden, diese Daten dann aber nur einmal verarbeitet werden. Dies kann in der Weise durchgeführt werden, dass der Daten-Verarbeiter prüft, ob die in einem Übertragungszyklus vom Daten-Erzeuger empfangenen Daten bereits aus einem vorausgehenden Übertragungszyklus bekannt sind und dem Daten-Verarbeiter vorliegen. Der Daten-Verarbeiter verwirft dann entweder die bereits vorliegenden Daten oder die nochmals empfangenen Daten.

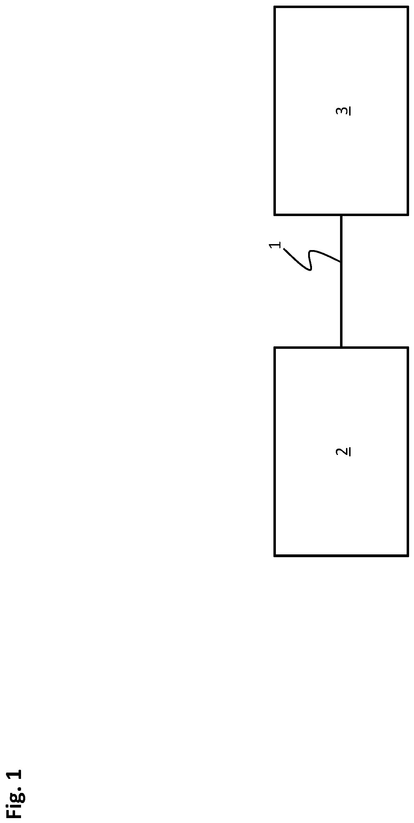

Fig. 1 zeigt in seiner allgemeinsten Form den Aufbau eines Datenübertragungssystems zum zyklischen Übertragen von Daten zwischen zwei Kommunikationsteilnehmern auf einem Datenübertragungskanal 1 gemäß der vorstehenden Vorgehensweise. Der eine Kommunikationsteilnehmer ist der Daten-Verarbeiter 2 und der andere Kommunikationsteilnehmer ist der Daten-Erzeuger 3. Ein Übertragungszyklus auf dem Datenübertragungskanal 1 wird so ausgeführt, dass zwischen dem Daten-Verarbeiter 2 und dem Daten-Erzeuger 3 Daten in beide Richtungen ausgetauscht werden.

Bezogen auf ein Automatisierungssystem als Datenübertragungssystem ist der Datenübertragungskanal 1 dann der Feldbus, wobei der Daten-Verarbeiter 2 eine Steuereinrichtung darstellt, die als Master-Teilnehmer den Datenverkehr auf dem Feldbus bestimmt. Der Daten-Erzeuger 3 dagegen ist ein Slave-Teilnehmer am Feldbus, also ein Maschinenperipherie-Gerät, das auf Anfrage des Master-Teilnehmers Daten an diesen übermittelt. In der Regel sind dabei eine Vielzahl von Daten-Erzeugern 3, also Slave-Teilnehmern an den Feldbus, also dem Datenübertragungskanal 1 angeschlossen, die parallel vom Daten-Verarbeiter 2, also dem Master-Teilnehmer angesprochen werden.

Wenn das im Datenübertragungssystem eingesetzte Protokoll eine Datenverarbeitung im Durchlauf ermöglicht, können mit einem einzelnen Telegramm in einem Übertragungszyklus Daten sowohl vom dem Daten-Verarbeiter 2 zum Daten-Erzeuger 3 also auch Daten vom Daten-Erzeuger 3 zum Daten-Verarbeiter 2 übertragen werden. Das Feldbus-Protokoll EtherCAT ermöglicht eine solche Datenverarbeitung im Durchlauf. Alternativ besteht auch die Möglichkeit, dass jeder Kommunikationsteilnehmer, d.h. sowohl der Daten-Verarbeiter 2 als auch der Daten-Erzeuger 3 in einem Übertragungszyklus Daten mit Hilfe eines separaten Telegramms versendet.

Wenn eine synchrone Datenverarbeitung im Daten-Verarbeiter 2 gewünscht wird, bei der der Daten-Verarbeiter 2 in jedem Kommunikationszyklus neue Daten verarbeitet, was insbesondere Zielsetzung bei der Verarbeitung von Prozessdaten im Rahmen von Steuerungsaufgaben ist, muss berücksichtigt werden, wie viele Übertragungszyklen der Daten-Erzeuger 3 bei einem Datenaustausch benötigt, um nach dem Empfang eines Telegramms des Daten-Verarbeiter 2 auf ein Kommando im empfangenen Telegramm zu reagieren.

Der Daten-Verarbeiter 2 ist dann so eingestellt, dass auf dem Datenübertragungskanal 1 empfangene Daten um die Anzahl von Übertragungszyklen verzögert verarbeitet werden, die der Daten-Erzeuger 3 braucht, um auf das Kommando des Daten-Verarbeiters 2 zu reagieren. So kann gewährleistet werden, dass, wenn der Daten-Verarbeiter 2 dem Daten-Erzeuger 3 mit einem Wiederhol-Kommando die Datenübertragung in einem Übertragungszyklus als fehlerhaft anzeigt, der Daten-Verarbeiter 2 die vom Daten-Erzeuger 3 nach dem Empfang des Wiederhol-Kommandos nochmals übertragenen Daten auch empfängt, bevor der Daten-Verarbeiter 2 die Verarbeitung dieser Daten ausführt.

In der Regel ist es wünschenswert, die Totzeit, die beim Daten-Verarbeiter 2 mindestens eingestellt werden muss, möglichst kurz halten zu können. Wenn jeder Kommunikationsteilnehmer, d.h. sowohl der Daten-Verarbeiter 2 als auch der Daten-Erzeuger 3 in einem Übertragungszyklus Daten mit Hilfe eines eigenen Telegramms versenden, kann das Noch-Einmal-Senden der Daten durch den Daten-Erzeuger 3 in Reaktion auf das Wiederhol-Kommando des Daten-Verarbeiters 2 in ein- und demselben Übertragungszyklus durchgeführt werden, da die Telegramme der beiden Kommunikationsteilnehmer zueinander zeitlich versetzt ausgeführt werden können. Der Daten-Erzeuger 3 hat dann ausreichend Zeit zur Auswertung des Telegramms des Daten-Verarbeiters 2, bevor der Daten-Erzeuger 3 sein Telegramm im Übertragungszyklus verschickt, um mit dem Telegramm eine Telegramm-Wiederholung in Reaktion auf ein Wiederhol-Kommando des Daten-Verarbeiter 2 auszuführen. Die minimale Totzeit für die Verarbeitung der Daten durch den Daten-Verarbeiter 2 beträgt in diesem Fall einen Übertragungszyklus. Die Reaktion des Daten-Erzeugers 3 kann aber auch, wenn eine entsprechende Einstellung beim Daten-Erzeuger 3 vorgenommen ist, erst im folgenden Übertragungszyklus oder in einem noch späteren Übertragungszyklus erfolgen.

Wenn mit einem einzelnen Telegramm in einem Übertragungszyklus sowohl Daten vom dem Daten-Verarbeiter 2 zum Daten-Erzeuger 3 als auch Daten vom Daten-Erzeuger 3 zum Daten-Verarbeiter 2 übertragen werden, ist es erforderlich, wenn eine minimale Totzeit für die Verarbeitung der Daten durch den Daten-Verarbeiter 2 von nur einem Übertragungszyklus erreicht werden soll, den Durchlauf des Telegramms durch den Daten-Erzeuger 3 so auszugestalten, dass der Daten-Erzeuger 3 ausreichend Zeit zur Auswertung der vom Daten-Verarbeiter 2 mit dem Telegramm übersandten Kommandos hat. Dies kann durch einen Telegrammaufbau erreicht werden, bei dem die Kommandos des Daten-Verarbeiters 2 in einem vorderen Abschnitt des Telegramms angeordnet sind, der Daten-Erzeuger 3 seine Daten in das Telegramm aber erst in einem hinteren Abschnitt einträgt. Der Daten-Erzeuger 3 kann dann die mit dem Telegramm übersandten Kommandos des Daten-Verarbeiters 2 interpretieren bevor der Daten-Erzeuger 3 seine Daten in das Telegramm einträgt. Der Daten-Erzeuger 3 kann so bereits mit dem Telegramm, mit dem der Daten-Erzeuger 3 ein Wiederhol-Kommando übersandt hat, die Daten aus dem fehlerhaften Übertragungszyklus nochmals verschicken.

Wenn eine solche Kommandointerpretation im Daten-Erzeuger 3 während des Telegrammdurchlaufs nicht möglich ist, kann die Reaktion des Daten-Erzeugers 3 auf ein Wiederhol-Kommando, nämlich ein Noch-Einmal-Senden der Daten des fehlerhaften Übertragungszyklus, auch erst mit dem durchlaufenden Telegramm des folgenden Übertragungszyklus oder mit dem durchlaufenden Telegramm in einem noch späteren Übertragungszyklus erfolgen.

Der Daten-Erzeuger 3 erzeugt in der Regel in jedem Übertragungszyklus die gleiche Datenmenge. Der Daten-Verarbeiter 2 ist dann auch so eingestellt, dass der Daten-Verarbeiter 2 in jedem Übertragungszyklus wenigstens die Datenmenge, die vom Daten-Erzeuger 3 bereitgestellt wird, verarbeitet. Alternativ können aber auch vom Daten-Erzeuger 3 für verschiedene Übertragungszyklen unterschiedliche Datenmengen erzeugt werden. Die Verarbeitungskapazität des Daten-Verarbeiters 2 ist dann auf die im Übertragungszyklus von dem Daten-Erzeuger 3 gelieferte Datenmenge abgestimmt.

Die von dem Daten-Erzeuger 3 erzeugten Daten werden lokal in einem Zwischenspeicher abgelegt, um dann im Rahmen eines Übertragungszyklus nach Anforderung durch den Daten-Verarbeiter 2 verschickt zu werden. Der Zwischenspeicher im Daten-Erzeuger 3 kann als Ringspeicher ausgebildet sein. Bei einem Ringspeicher werden die Daten hintereinander gespeichert. Wenn das Ende des Ringspeichers erreicht ist, wird wieder am Anfang begonnen.

In Bezug auf die Kommunikationszykluszeit und die Speichergröße des Ringspeichers ist zu beachten, dass keine Daten im Ringspeicher überschrieben werden, die noch nicht vom Daten-Erzeuger 3 zum Daten-Verarbeiter 2 übertragen worden sind. Es muss deshalb sichergestellt werden, dass vom Daten-Erzeuger 3 im Durchschnitt, d.h. über mehrere Kommunikationszyklen betrachtet, nicht mehr neue Daten erzeugt werden, als vom Daten-Erzeuger 3 zum Daten-Verarbeiter 2 im Rahmen dieser mehreren Kommunikationszyklen übertragen werden können.

Im Folgenden wird das Vorgehen zur verlustfreien zyklischen Übertragung von Daten zwischen dem Daten-Erzeuger 3 und dem Daten-Verarbeiter 2 auf dem Datenübertragungskanal 1, bei dem eine konstante Bandbreite des Kommunikationszyklus auch bei einer Wiederholung der Datenübertragung gewährleistet ist, an einem Beispiel erläutert. Dabei wird auf die konkrete Ausgestaltung der Datenübertragungstechnik nicht eingegangen. Es besteht insbesondere die Möglichkeit, die beschriebene Vorgehensweise bei einem Feldbus für industrielle Anwendungen, wie er in der Norm IEC 61158 definiert ist, einzusetzen. Mögliche Protokolle für einen Feldbus sind in den Normen IEC 61784-1 und IEC 61784-2 zusammengestellt.

Für das Beispiel wird angenommen, dass der Daten-Erzeuger 3 in jedem Übertragungszyklus ein Datenpaket mit vier Datenfeldern bereitstellt, wobei jedes Datenfeld eine feste Anzahl von Datenelementen, beispielweise im Umfang eines Bytes enthält. Die Datenelemente der vier Datenfelder sind jeweils Nutzdaten, beispielsweise Prozessdaten, die für eine Verarbeitung durch den Daten-Verarbeiter 2 im Rahmen von Steuerungsaufgaben bestimmt sind.

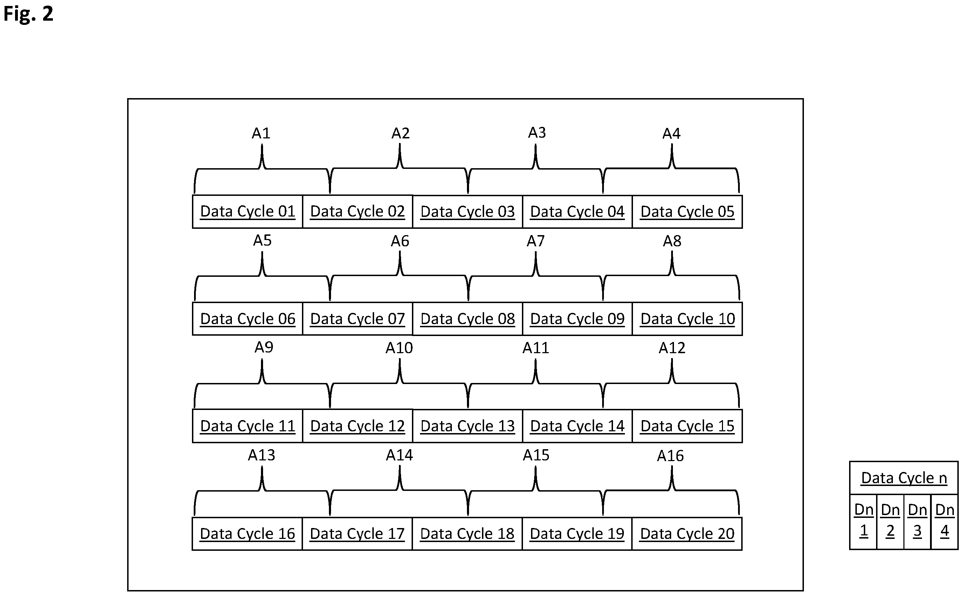

In Fig. 2 ist eine Ausgestaltung des Zwischenspeichers für den Daten-Erzeuger 3 zur Aufnahme der vom Daten-Erzeuger 3 erzeugten Daten in Form eines Ringspeichers gezeigt. Der Ringspeicher ist so ausgelegt, dass vom Daten-Erzeuger 3 bereitgestellte Daten aus 20 Übertragungszyklen aufgenommen werden können. Die einzelnen Datenpakete sind im Ringspeicher in Fig. 2 als Data Cycle 1-20 bezeichnet. In Fig. 2 ist dann weiter in einem zusätzlichen Ausschnitt die Unterteilung eines beliebigen Datenpaketes im Ringspeicher, das als Data Cycle mit der Nummer n gekennzeichnet ist, in die vier Datenfelder dargestellt. Jedes Datenfeld ist mit dem Buchstaben D, der Nummer n des zu Datenpaketes Data Cycle und mit einer fortlaufenden Nummer von 1 bis 4 bezeichnet.

Es wird weiter angenommen, dass der Datenübertragungskanal 1 mit einer Datenübertragungsrate betrieben wird, mit der in jedem Übertragungszyklus eine Datenmenge von fünf Datenfeldern vom Daten-Erzeuger 3 zum Daten-Verarbeiter 2 übertragbar ist. Die in einem Übertragungszyklus übertragbare Datenmenge übersteigt so die von dem Daten-Erzeuger 3 für einen Übertragungszyklus erzeugte Datenmenge um ein Viertel, prozentual ausgedrückt um 25%. Mit vier Übertragungszyklen kann so die vom Daten-Erzeuger 3 für fünf Übertragungszyklen erzeugte Datenmenge übertragen werden. Die Bandbreite des Kommunikationszyklus im Datenübertragungssystem beträgt fünf Übertragungszyklen, wobei einer der fünf Übertragungszyklen redundant in Bezug auf die Übertragung der von dem Daten-Erzeuger 3 für die fünf Übertragungszyklen bereitgestellten Datenmenge ist und für die Wiederholung der Übertragung von Daten aus einem als fehlerhaft erkannten Übertragungszyklus genutzt werden kann.

Bei dem Beispiel übersteigt die in einem Übertragungszyklus vom Daten-Erzeuger 3 zum Daten-Verarbeiter 2 übertragbare erste Datenmenge die von dem Daten-Erzeuger 3 für einen Übertragungszyklus erzeugte zweite Datenmenge um einen prozentualen Anteil, der n-fach multipliziert der zweiten Datenmenge entspricht, wobei n dabei eine ganze Zahl größer 1 ist. Im Beispiel ist der prozentuale Anteil 25% und n=4. Es ist jedoch grundsätzlich nicht notwendig, dass der prozentuale Anteil, um den die erste Datenmenge die zweite Datenmenge übersteigt, n-fach multipliziert genau der zweiten Datenmenge entspricht.

Dem in Fig. 2 gezeigten Ringspeicher sind zur Übertragung der im Ringspeicher ablegbaren Daten des Daten-Erzeugers 3 aus den 20 Übertragungszyklen 16 Speicheradressen A1-A16 zugeordnet, wie in Fig. 2 mit Klammern angedeutet ist. Jede Speicheradresse A1-A16 kennzeichnet einen Datenbereich aus fünf Datenfeldern, dessen Daten mit einem Übertragungszyklus auf dem Datenübertragungskanal 1 vom Daten-Erzeuger 3 zum Daten-Verarbeiter 2 übertragen werden können.

Es wird ferner angenommen, dass der Daten-Verarbeiter 2 in jedem Übertragungszyklus jeweils eine Verarbeiter-Dateneinheit aus zwei Datenfeldern an den Daten-Erzeuger 3 sendet. Der Daten-Erzeuger 3 antwortet im jeweiligen Übertragungszyklus auf die Verarbeiter-Dateneinheit des Daten-Verarbeiters 2 mit einer Erzeuger-Dateneinheit bestehend aus sieben Datenfeldern. Die Verarbeiter-Dateneinheit mit zwei Datenfelder und die Erzeuger-Dateneinheit mit sieben Datenfeldern können, wie als Alternativen vorstehend erläutert, in einem einzelnen Telegramm einhalten sein oder auch als separate Telegramme übertragen werden.

Die vom Daten-Verarbeiter 2 im Übertragungszyklus versandten zwei Datenfelder in der Verarbeiter-Dateneinheit sind für Datenelemente reserviert, die jeweils als Kommandodaten interpretiert werden.

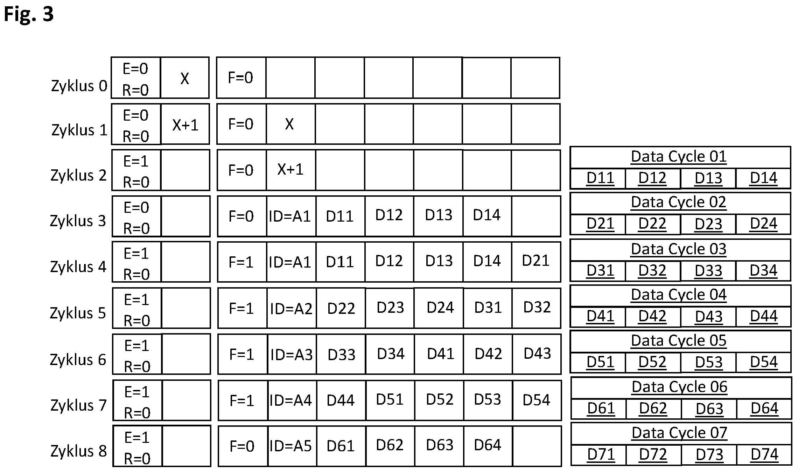

Das erste Datenfeld in der Verarbeiter-Dateneinheit enthält, wie beispielhaft später im Zusammenhang mit der Fig. 3 noch weiter gezeigt und erläutert, wenigstens zwei Datenelemente, wobei ein erstes Kommando-Datenelement ein Betriebsstatus-Kommando E und ein zweites Kommando-Datenelement ein Wiederhol-Kommando R ist, die jeweils den Wert 0 oder den Wert 1 annehmen können. Der Wert O des Betriebsstatus-Kommandos E zeigt an, dass der Übertragungszyklus Teil einer Initialisierungssequenz ist. Der Wert 1 des Übertragungsstatus-Kommandos E zeigt an, dass der Übertragungszyklus Teil einer Datenübertragungssequenz ist. Der Wert O des Wiederhol-Kommandos R zeigt an, dass der vorausgehende Übertragungszyklus fehlerfrei durchgeführt wurde. Der Wert 1 des Wiederhol-Kommandos R zeigt an, dass im vorausgehende Übertragungszyklus ein Fehler bei der Datenübertragung aufgetreten ist. Im erste Datenfeld können neben dem Betriebsstatus-Kommando E und dem Wiederhol-Kommando R weitere Kommando-Datenelemente enthalten sein.

Die Datenelemente im zweiten Datenfeld der Verarbeiter-Dateneinheit werden abhängig den Werten der Kommando-Datenelemente im ersten Datenfeld der Verarbeiter-Dateneinheit interpretiert und können Datenwerte oder Adressenwerte ID sein. Die Adressenwerte ID beziehen sich insbesondere auf die 16 Speicheradressen A1-A16 des in Fig. 2 gezeigten Ringspeichers.

Von den sieben Datenfelder in der Erzeuger-Dateneinheit sind die ersten zwei Datenfelder der Erzeuger-Dateneinheit für Datenelemente reserviert, die jeweils als Kommandodaten interpretiert werden. Die weiteren fünf Datenfelder in der Erzeuger-Dateneinheit dienen dazu die Nutzdaten, die vom Daten-Erzeuger 3 bereitstellt wurden und im Ringspeicher zwischengespeichert sind, zum Daten-Verarbeiter 2 zu übertragen. Jedes Nutzdatenfeld der Erzeuger-Dateneinheit kann dabei ein vom Daten-Erzeuger 3 bereitgestelltes und im Ringspeicher zwischengespeichertes Datenfeld aufnehmen.

Das erste Datenfeld der Erzeuger-Dateneinheit enthält als Kommando-Datenelement wenigstens ein Übertragungsstatus-Kommando F, das den Wert 0 oder den Wert 1 annehmen kann. Der Wert O des Übertragungsstatus-Kommandos F zeigt an, dass die fünf Nutzdatenfelder der Erzeuger-Dateneinheit nicht vollständig mit Daten belegt sind, und der Wert 1 des Übertragungsstatus-Kommandos F zeigt an, dass die fünf Nutzdatenfelder der Erzeuger-Dateneinheit vollständig mit Daten belegt sind.

Alternativ kann das Übertragungsstatus-Kommando F statt mit dem Wert 0 beziehungsweise 1 zwischen einer unvollständigen und einer vollständigen Belegung der Nutzdatenfelder der Erzeuger-Dateneinheit zu unterscheiden, auch als Wert immer die genaue Anzahl der belegten Nutzdatenfelder der Erzeuger-Dateneinheit angeben.

Die Datenelemente im zweiten Datenfeld der Erzeuger-Dateneinheit werden dann abhängig den Werten der Kommando-Datenelemente im ersten Datenfeld der Erzeuger-Dateneinheit interpretiert und können Datenwerte oder Adressenwerte ID sein. Die Adressenwerte ID beziehen sich insbesondere auf die 16 Speicheradressen A1-A16 des in Fig. 2 gezeigten Ringspeichers.

In Fig. 3 ist eine erste Abfolge der ersten neun Übertragungszyklen Zyklus 0 bis Zyklus 8 für ein zyklisches Übertragen von Nutzdaten zwischen dem Daten-Verarbeiter 2 und dem Daten-Erzeuger 3 auf dem Datenübertragungskanal 1 dargestellt. In jedem Übertragungszyklus sendet, wie vorstehend erläutert, sowohl der Daten-Verarbeiter 2 eine Verarbeiter-Dateneinheit mit zwei Datenfeldern als auch der Daten-Erzeuger 3 eine Erzeuger-Dateneinheit mit sieben Datenfeldern.

Der Kommunikationszyklus für eine Datenübertragung im Datenübertragungssystem setzt sich, wie gleichfalls vorstehend erläutert ist, aus fünf aufeinanderfolgenden Übertragungszyklen zusammen. Bei der in Fig. 3 gezeigten ersten Abfolge von Übertragungszyklen beginnt ein erster Kommunikationszyklus mit dem fünften Übertragungszyklus Zyklus 4 und endet mit neunten Übertragungszyklus Zyklus 8.

Vor dem Beginn der Datenübertragung des ersten Kommunikationszyklus wird mit den vorausgehenden Übertragungszyklen in einer Initialisierungssequenz die Totzeit, die der Anzahl von Übertragungszyklen entspricht, die der Daten-Erzeuger 3 braucht, um auf ein Kommando des Daten-Verarbeiters 2 zu reagieren, im Datenübertragungssystem ermittelt. Der Daten-Verarbeiter 2 wird dann so eingestellt, dass der Daten-Verarbeiter 2 die vom Daten-Erzeuger 3 auf dem Datenübertragungskanal 1 empfangenen Nutzdaten mindestens um die Anzahl von Übertragungszyklen verzögert verarbeitet, die der Totzeit entspricht.

Das Datenübertragungssystem ist in der erläuterten Ausführungsform so ausgelegt, dass der Daten-Erzeuger 3 für die Interpretation von Kommando des Daten-Verarbeiters 2 einen Übertragungszyklus benötigt.

Am Beginn der Initialisierungssequenz sendet der Daten-Verarbeiter 2 im ersten Übertragungszyklus Zyklus 0 im ersten Datenfeld der ersten Verarbeiter-Dateneinheit das Betriebsstatus-Kommando E=0, das anzeigt, dass das Datenübertragungssystem sich im Initialisierungsmodus befindet. Zusätzlich wird noch das Wiederhol-Kommando R=0 vom Daten-Verarbeiter 2 in das erste Datenfeld der ersten Verarbeiter-Dateneinheit eingetragen. Im zweiten Datenfeld der ersten Verarbeiter-Dateneinheit wird ein Datenwert X übertragen.

Da der Daten-Erzeuger 3 im ersten Übertragungszyklus Zyklus 0 die Kommandos in der ersten Verarbeiter-Dateneinheit noch nicht ausgewertet hat und somit im ersten Übertragungszyklus Zyklus 0 noch nicht auf die Kommandos in der ersten Verarbeiter-Dateneinheit reagiert, versendet der Daten-Erzeuger 3 im ersten Übertragungszyklus Zyklus 0 eine erste Erzeuger-Dateneinheit, in der nur im ersten Datenfeld das Übertragungsstatus-Kommando F=0 eingetragen ist. Die restlichen sechs Datenfelder der ersten Erzeuger-Dateneinheit bleiben frei. Der Wert 0 des Übertragungsstatus-Kommandos F zeigt an, dass die fünf Nutzdatenfelder der Erzeuger-Dateneinheit nicht vollständig mit Daten belegt sind.

Im zweiten Übertragungszyklus Zyklus 1 versendet der Daten-Verarbeiter 2 im ersten Datenfeld der zweiten Verarbeiter-Dateneinheit wiederum das Betriebsstatus-Kommando E=0 und das Wiederhol-Kommando R=0. In das zweite Datenfeld der zweiten Verarbeiter-Dateneinheit trägt der Daten-Verarbeiter 2 einen gegenüber den Datenwert X der ersten Verarbeiter-Dateneinheit erhöhten Datenwert X+1 ein.

Der Daten-Verarbeiter 2 geht im Initialisierungsmodus, dann, wenn im ersten Datenfeld der Verarbeiter-Dateneinheit das Betriebsstatus-Kommando E=0 eingetragen ist, so vor, das mit jedem Übertragungszyklus der Datenwert im zweiten Datenfeld der Verarbeiter-Dateneinheit um 1 hochgezählt wird. Mit dieser Vorgehensweise wird mit den aufeinanderfolgenden Verarbeiter-Dateneinheiten der Initialisierungssequenz eine Datenwertfolge bereitgestellt, bei der jedem Übertragungszyklus der Initialisierungssequenz ein individueller Datenwert zugeordnet ist. Statt einer Inkrementierung des Datenwertes kann auch eine Dekrementierung erfolgen. Es kann aber auch eine auf andere Weise individualisierte Folge von Datenwerten im zweiten Datenfeld der Verarbeiter-Dateneinheit eingetragen werden.

Der Daten-Erzeuger 3 hat im zweiten Übertragungszyklus nun das Betriebsstatus-Kommando E=0 aus der ersten Verarbeiter-Dateneinheit ausgewertet und trägt in Reaktion darauf in das zweite Datenfeld der zweiten Erzeuger-Dateneinheit gespiegelt den Datenwert X aus dem zweiten Datenfeld der ersten Verarbeiter-Dateneinheit ein. Die fünf Nutzdatenfelder der zweiten Erzeuger-Dateneinheit bleiben weiter leer, was der Daten-Erzeuger 3 im ersten Datenfeld der zweiten Erzeuger-Dateneinheit mit dem Übertragungsstatus-Kommando F=0 anzeigt.

Der Daten-Erzeuger 3 ist grundsätzlich so eingestellt, dass der Daten-Erzeuger 3, wenn der Daten-Erzeuger 3 in einer Verarbeiter-Dateneinheit im ersten Datenfeld das Betriebsstatus-Kommando E=0 erkennt, das anzeigt, dass das Datenübertragungssystem sich im Initialisierungsmodus befindet, den Datenwert im zweiten Datenfeld der entsprechenden Verarbeiter-Dateneinheit in das zweite Datenfeld der nächsten an Daten-Verarbeiter 2 versandten Erzeuger-Dateneinheit einträgt.

Der Daten-Verarbeiter 2 findet dann bei der Auswertung der zweiten Erzeuger-Dateneinheit durch die Rückkopplung des Datenwertes X, die der Daten-Verarbeiter 2 mit der ersten Verarbeiter-Dateneinheit im ersten Übertragungszyklus Zyklus 0 versandt hat, heraus, dass der Daten-Erzeuger 3 einen Übertragungszyklus verzögert auf das Kommando des Daten-Verarbeiters 2 reagiert. Für den Daten-Verarbeiter 2 ergibt sich dann eine Totzeit, mit der der Daten-Verarbeiter 2 die vom Daten-Erzeuger empfangenen Nutzdaten verzögert verarbeiten muss, um den Daten-Erzeuger die Möglichkeit einzuräumen, auf Kommandos des Daten-Verarbeiters 2 zu reagieren, von zwei Übertragungszyklen.

Nachdem die Totzeit bestimmt ist, beendet der Daten-Verarbeiter 2 nach dem zweiten Übertragungszyklus Zyklus 1 den Initialisierungsmodus und geht zum Übertragungsmodus über.

Im dritten Übertragungszyklus Zyklus 2 trägt der Daten-Verarbeiter 2 nun in das erste Datenfeld der dritten Verarbeiter-Dateneinheit das Betriebsstatus-Kommando E=1, das den Übertragungsmodus anzeigt, ein. Weiterhin wird in das erste Datenfeld der dritten Verarbeiter-Dateneinheit vom Daten-Verarbeiter 2 das Wiederhol-Kommando R=0 eingeblendet. Das zweite Datenfeld der dritten Verarbeiter-Dateneinheit bleibt leer.

Alternativ kann der Daten-Verarbeiter 2 die Initialisierungssequenz auch um weitere Übertragungszyklen verlängern, indem der Daten-Verarbeiter 2 weitere Verarbeiter-Dateneinheiten mit dem Betriebsstatus-Kommando E=0 im ersten Datenfeld und einem Datenwert aus der Datenfolge im zweiten Datenfeld verschickt, wodurch eine Mehrfach-Bestimmung der Totzeit aus den vom Daten-Erzeuger nach Auswertung des Betriebsstatus-Kommandos E=0 rückgekoppelten Datenwerten in den Erzeuger-Dateneinheiten möglich ist. Der Daten-Verarbeiter 2 kann so gegebenenfalls Schwankungen der Totzeit feststellen und dann bei der im Daten-Verarbeiter eingestellten Verzögerung für die Verarbeitung von Nutzdaten des Daten-Erzeugers 3 berücksichtigen.

Die Initialisierungssequenz vor der eigentlichen Datenübertragung kann jedoch grundsätzlich auch entfallen, wenn dem Daten-Verarbeiter 2 bekannt ist, wie viele Übertragungszyklen der Daten-Erzeuger 3 benötigt, um auf Kommandos des Daten-Verarbeiters 2 zu reagieren. Die Anzahl der Übertragungszyklen, um die die Verarbeitung von Nutzdaten im Daten-Verarbeiter 2 gegenüber dem Übertragungszyklus, in dem die Nutzdaten empfangen worden sind, verzögert werden muss, kann dann im Daten-Verarbeiter 2 direkt eingestellt werden.

Auf die vom Daten-Verarbeiter 2 im dritten Übertragungszyklus Zyklus 2 versandte dritte Verarbeiter-Dateneinheit antwortet der Daten-Erzeuger 3 aufgrund der um einen Übertragungszyklus verzögerten Auswertung mit einer dritte Erzeuger-Dateneinheit, die auf die im zweiten Übertragungszyklus Zyklus 1 versandte zweite Verarbeiter-Dateneinheit regiert, und das Übertragungsstatus-Kommando F=0 im ersten Datenfeld und den gespiegelten Datenwert X+1 aus der zweiten Verarbeiter-Dateneinheit im zweiten Datenfeld aufweist. Die fünf Nutzdatenfelder bleiben weiter leer.

Im Übertragungsmodus, auf den Daten-Verarbeiter 2 mit dem dritten Übertragungszyklus Zyklus 2 umgeschaltet hat, verarbeitet der Daten-Verarbeiter 2 Erzeuger-Dateneinheiten nur weiter, wenn das Übertragungsstatus-Kommando F im ersten Datenfeld mit dem Wert 1 anzeigt, dass alle fünf Nutzdatenfelder der Erzeuger-Dateneinheit Daten enthalten. Die im dritten Übertragungszyklus Zyklus 2 vom Daten-Erzeuger 3 versandte dritte Erzeuger-Dateneinheit, die im ersten Datenfeld das Übertragungsstatus-Kommando F=0 aufweist, wird deshalb vom Daten-Verarbeiter 2 verworfen.

Der Daten-Verarbeiter 2 setzt den Übertragungsmodus dann mit dem vierten Übertragungszyklus Zyklus 3 fort, in dem der Daten-Verarbeiter 2 eine vierte Verarbeiter-Dateneinheit verschickt, die identisch mit der dritten Verarbeiter-Dateneinheit aus dem dritten Übertragungszyklus Zyklus 2 ist. Das erste Datenfeld der vierten Verarbeiter-Dateneinheit enthält wiederum das Betriebsstatus-Kommando E=1 und das Wiederhol-Kommando R=0. Das zweite Datenfeld der vierten Verarbeiter-Dateneinheit bleibt leer.

Der Daten-Erzeuger 3, der in der Zwischenzeit die dritte Verarbeiter-Dateneinheit ausgewertet hat, die dem Daten-Erzeuger mit dem Betriebsstatus-Kommando E=1 den Wechsel in den Übertragungsmodus anzeigt, beginnt mit der Bereitstellung von Nutzdaten für den vierten Übertragungszyklus Zyklus 3. Wie erläutert, ist der Daten-Erzeuger 3 ausgelegt, für jeden Übertragungszyklus ein Datenpaket Data Cycle mit vier Datenfeldern bereitstellen, das in dem Ringspeicher des Daten-Erzeugers 3 abgelegt wird. Das vom Daten-Erzeuger 3 erzeugte erste Datenpaket Data Cycle 1, das die vier Datenfelder D11-D14 umfasst, wird im Ringspeicher unter der ersten Speicheradresse A1 abgespeichert.

Im vierten Übertragungszyklus Zyklus 3 trägt der Daten-Erzeuger 3 dann die vier Datenfelder D11-D14 des ersten Datenpaketes Data Cycle 1 in die ersten vier der fünf Nutzdatenfelder der vierten Erzeuger-Dateneinheit ein. Das fünfte Nutzdatenfeld bleibt weiterhin leer, da keine weiteren Daten vom Daten-Erzeuger 3 im Ringspeicher bereitgestellt sind.

In das erste Datenfeld der vierten Erzeuger-Dateneinheit wird vom Daten-Erzeuger 3 deshalb auch wieder das Übertragungsstatus-Kommando F=0 eingetragen, das anzeigt, dass nicht alle Nutzdatenfelder in der Erzeuger-Dateneinheit aufgefüllt sind. Mit dem zweiten Datenfeld der vierten Erzeuger-Dateneinheit überträgt der Daten-Erzeuger 3 als Adressenwert ID die Ringspeicher-Adresse A1, unter der die von der vierten Erzeuger-Dateneinheit übertragenen Nutzdaten im Ringspeicher abgespeichert sind.

Da der Daten-Verarbeiter 2 im Übertragungsmodus so eingestellt, dass, wenn das vom Daten-Erzeuger 3 übertragene Übertragungsstatus-Kommando F=0 ist, der Daten-Verarbeiter 2 dann die Daten in den Nutzdatenfeldern des Erzeuger-Dateneinheit nicht verarbeitet, verwirft der Daten-Verarbeiter 2 die Daten in den vier Nutzdatenfeldern der vierten Erzeuger-Dateneinheit.

Den fünften Übertragungszyklus Zyklus 4 startet der Daten-Verarbeiter 2 mit der fünften Verarbeiter-Dateneinheit, die der vierten Verarbeiter-Dateneinheit aus dem vierten Übertragungszyklus Zyklus 3 entspricht. Das heißt, im ersten Datenfeld der fünften Verarbeiter-Dateneinheit ist das Betriebsstatus-Kommando E auf den Wert 1 und das Wiederhol-Kommando R auf den Wert 0 gesetzt.

Der Daten-Erzeuger 3 hat nach Auswertung der vierten Verarbeiter-Dateneinheit in der Zwischenzeit im Ringspeicher ein zweites Datenpaket Data Cycle 2 mit vier Datenfeldern D21-D24 abgelegt. Im Ringspeicher des Daten-Erzeugers 3 sind jetzt die ersten acht Datenfelder durch das vom Daten-Erzeuger 3 erzeugte erste Datenpakete Data Cycle 1 und das zweite Datenpakete Data Cycle 2 belegt.

Der Daten-Erzeuger 3 ist im Übertragungsmodus so eingestellt, dass der Daten-Erzeuger 3 dann, wenn in das erste Datenfeld der vorausgehend übertragenen Erzeuger-Dateneinheit für das Übertragungsstatus-Kommando F den Wert 0 anzeigt, die Daten in den Nutzdatenfeldern der Erzeuger-Dateneinheit in den Nutzdatenfeldern der nächsten Erzeuger-Dateneinheit wiederholt werden.

Da in der vierten Erzeuger-Dateneinheit die fünf Nutzdatenfelder nicht vollständig mit Daten belegt waren und deshalb das Übertragungsstatus-Kommando F auf den Wert 0 gesetzt war, trägt der Daten-Erzeuger 3 in die fünf Nutzdatenfelder der fünften Erzeuger-Dateneinheit die vier Datenfelder D11-D14 des ersten Datenpaketes Data Cycle 1 und das erste Datenfeld D21 des zweiten Datenpaketes Data Cycle 2, die unter der ersten Ringspeicher-Adresse A1 abgelegt sind, ein.

Das Übertragungsstatus-Kommando F im ersten Datenfeld der fünften Erzeuger-Dateneinheit erhält jetzt den Wert 1, der anzeigt, dass die fünf Nutzdatenfelder der fünften Erzeuger-Dateneinheit vollständig mit Daten belegt sind. Im zweiten Datenfeld der fünften Erzeuger-Dateneinheit wird als Adressenwert ID wieder die erste Speicheradresse A1 des Ringspeichers angegeben.

Wenn, wie bei der ersten Abfolge in Fig. 3 keine Fehler bei der Datenübertragung der Erzeuger-Dateneinheiten auftreten, sendet der Daten-Verarbeiter 2 in den weiteren Übertragungszyklen eine identische Verarbeiter-Dateneinheit, die im ersten Datenfeld das Betriebsstatus-Kommando E=1, das für den Betriebsmodus Datenübertragung steht, und das Wiederhol-Kommando R=0, das anzeigt, dass die Datenübertragung im vorausgegangenen Übertragungszyklus fehlerfrei durchgeführt wurde. Das zweite Datenfeld der Verarbeiter-Dateneinheit bleibt dagegen leer. Fig. 3 zeigt für den sechsten Übertragungszyklus Zyklus 5 bis neunten Übertragungszyklus Zyklus 8 die entsprechenden sechste bis neunten Verarbeiter-Dateneinheiten.

Der Daten-Erzeuger 3 stellt für die weiteren Übertragungszyklen nach Auswertung der Verarbeiter-Dateneinheit aus dem vorausgehenden Übertragungszyklus jeweils ein weiteres Datenpaket Data Cycle bereit. Wie der in Fig. 3 gezeigten ersten Abfolge zu entnehmen ist, erzeugt der Daten-Erzeuger 3 für den sechsten Übertragungszyklus Zyklus 5 das dritte Datenpaket Data Cycle 3 mit den vier Datenfelder D31-D34, für den siebten Übertragungszyklus Zyklus 6 das vierte Datenpaket Data Cycle 4 mit den vier Datenfelder D41-D44, für den achten Übertragungszyklus Zyklus 7 das fünfte Datenpaket Data Cycle 5 mit den vier Datenfelder D51-D54 und für den neunten Übertragungszyklus Zyklus 8 das sechste Datenpaket Data Cycle 6 mit den vier Datenfelder D61-D64.

Die Datenfelder des Ringspeichers im Daten-Erzeuger 3 sind dann im sechsten Übertragungszyklus Zyklus 5 an der zweiten Speicheradresse A2, im siebten Übertragungszyklus Zyklus 6 an der dritten Speicheradresse A3 und im achten Übertragungszyklus Zyklus 7 an der vierten Ringspeicher-Adresse A4 vollständig gefüllt. Der Daten-Erzeuger 3 überträgt im ersten Datenfeld der sechsten, siebten und achten Erzeuger-Dateneinheiten entsprechend der fünften Erzeuger-Dateneinheit das Übertragungsstatus-Kommando F=1, das fünf vollständig belegte Nutzdatenfelder in der entsprechenden Erzeuger-Dateneinheit anzeigt. Im zweiten Datenfeld ist dann jeweils die übertragene Ringspeicher-Adresse ID angegeben, für die sechste Erzeuger-Dateneinheit die zweite Speicheradresse A2, für die siebte Erzeuger-Dateneinheit die dritte Speicheradresse A3 und die achte Erzeuger-Dateneinheit die vierten Ringspeicher-Adresse A4 ist.

In den fünf weiteren Nutzdatenfeldern der sechsten, siebten und achten Erzeuger-Dateneinheit werden dann vom Daten-Erzeuger 3 die unter den im zweiten Datenfeld angegebenen Ringspeicher-Adressen abgespeicherten Daten eingetragen. Für die sechste Erzeuger-Dateneinheit sind dies die drei nach der fünften Erzeuger-Dateneinheit verbleibenden Datenfelder D22-D24 des zweiten Datenpaketes Data Cycle 2 und die ersten zwei Datenfelder D31-D32 des dritten Datenpaketes Data Cycle 3. Die siebte Erzeuger-Dateneinheit enthält in den fünf Nutzdatenfeldern die restlichen beiden Datenfelder D33-D34 des vierten Datenpaketes Data Cycle 4 und die ersten drei Datenfelder D41-D43 des vierten Datenpaketes Data Cycle 4. In die fünf Nutzdatenfelder der achten Erzeuger-Dateneinheit sind das verbleibende Datenfeld D44 des vierten Datenpaketes Data Cycle 4 und die vier Datenfelder D51-D54 des fünften Datenpaketes Data Cycle 5 enthalten.

Im neunten Übertragungszyklus Zyklus 8 steht dem Daten-Erzeuger 3 für die Nutzdatenübertragung mit der neunten Erzeuger-Dateneinheit in dem Ringspeicher unter der fünften Ringspeicher-Adresse A5, die der Daten-Erzeuger 3 in das zweite Datenfeld der neunten Erzeuger-Dateneinheit einträgt, nur das sechste Datenpaket Data Cycle 6 mit vier Datenfeldern D61-D64 zur Verfügung. Das letzte Datenfeld der fünften Ringspeicher-Adresse A5 ist nicht belegt, weshalb der Daten-Erzeuger 3 im neunten Übertragungszyklus Zyklus 8 analog zum vierten Übertragungszyklus Zyklus 3 eine nicht vollständig gefüllte Erzeuger-Dateneinheit überträgt.

Im ersten Datenfeld der neunten Erzeuger-Dateneinheit trägt der Daten-Erzeuger 3 deshalb als Übertragungsstatus-Kommando F=0 ein, um die nicht-vollständige Datenbelegung der fünf Nutzdatenfeldern anzuzeigen. Analog zur vierten Erzeuger-Dateneinheit verwirft der Daten-Verarbeiter 2 dann die mit der neunten Erzeuger-Dateneinheit übertragenen Daten. Daraufhin wird dann die Datenübertragung, was in der ersten Abfolge in Fig. 3 nicht mehr gezeigt ist, analog zum fünften Datenübertragungszyklus Zyklus 4 im zehnten Übertragungszyklus Zyklus 9 mit einer Wiederholung der Übertragung der an der fünften Ringspeicher-Adresse A5 abgelegten Daten fortgesetzt, wobei aufgrund des in der Zwischenzeit vom Daten-Erzeuger gezeugten siebten Datenpaketes Data Cycle 7 mit den vier Datenfeldern D71-D74 alle Datenfelder der Ringspeicher-Adresse A5 gefüllt sind. Im Folgenden werden dann vier weitere Übertragungszyklen durchgeführt, mit denen die vollständig vom Daten-Erzeuger mit den achten bis zehnten Datenpaketen Data Cycle 8-10 gefüllten Datenfelder der sechsten bis achten Ringspeicher-Adressen A6-A8 übertragen werden.

Bei der in Fig. 3 gezeigten ersten Abfolge von Übertragungszyklen erfolgt jeweils eine fehlerfreie Übertragung der Dateneinheiten zwischen dem Daten-Erzeuger 3 und dem Daten-Verarbeiter 2 auf dem Datenübertragungskanal 1. Die Datenübertragung ist dabei so ausgestaltet, dass in jeweils vier Übertragungszyklen die vom Daten-Erzeuger 3 für fünf Übertragungszyklen erzeugte Datenmenge übertragen werden kann. Von den fünf Übertragungszyklen, die einen Kommunikationszyklus darstellen, ist deshalb immer ein Übertragungszyklus redundant.

Bei einer fehlerfreien Übertragung wird deshalb immer ein Übertragungszyklus von fünf Übertragungszyklen vom Daten-Verarbeiter nicht zur Verarbeitung der übertragenen Nutzdaten verwendet. In diesem redundanten Übertragungszyklus befindet sich in der vom Daten-Erzeuger zum Daten-Verarbeiter übertragenen Erzeuger-Dateneinheit immer wenigstens ein leeres Nutzdatenfeld. Der Daten-Erzeuger 3 zeigt dies mit dem Übertragungsstatus-Kommando F=0 an. Der Daten-Verarbeiter 2 ist dann so eingestellt, dass er die in der Erzeuger-Dateneinheit übertragenen Daten verwirft und auf die nächste vollständig übertragene Erzeuger-Dateneinheit wartet.

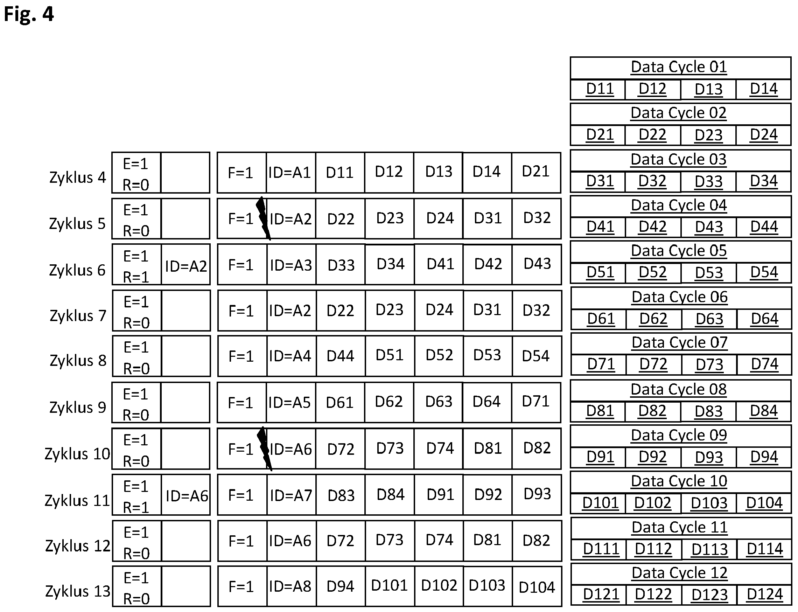

Mit dem redundanten Übertragungszyklus besteht die Möglichkeit, einen Übertragungszyklus innerhalb eines Kommunikationszyklus zu wiederholen, wenn ein Fehler bei der Datenübertragung in dem Übertragungszyklus aufgetreten ist, ohne die Bandbreite des Kommunikationszyklus vergrößern zu müssen, wie die zweite Abfolge von Übertragungszyklen in Fig. 4 zeigt.

Fig. 4 zeigt zehn Übertragungszyklen, die zwei Kommunikationszyklen abbilden. Bei der in Fig. 4 gezeigten zweiten Abfolge sind die ersten vier Übertragungszyklen Zyklus 0 bis 3 der ersten Abfolge in Fig. 3 nicht gezeigt, die wie erläutert, im Initialisierungsmodus zur Totzeitbestimmung dienen und am Beginn des Übertragungsmodus den ersten Kommunikationszyklus zur Nutzdatenübertragung starten. In Fig. 4 sind dann aber zusätzlich zu den fünften bis neunten Übertragungszyklen Zyklus 4 bis 8 die nachfolgenden zehnten bis fünfzehnten Übertragungszyklen Zyklus 9 bis 13 dargestellt.

Ferner sind in Fig. 4 auch die vom Daten-Erzeuger 3 für den zehnten bis vierzehnten Übertragungszyklen Zyklus 9 bis 13 jeweils bereitgestellten achten bis zwölften Datenpakete Data Cycle 8-12 gezeigt. Wie der in Fig. 4 gezeigten zweiten Abfolge zu entnehmen ist, erzeugt der Daten-Erzeuger 3 für den zehnten Übertragungszyklus Zyklus 9 das achte Datenpaket Data Cycle 8 mit den vier Datenfelder D81-D84, für den elften Übertragungszyklus Zyklus 10 das neunte Datenpaket Data Cycle 9 mit den vier Datenfelder D91-D94, für den zwölfte Übertragungszyklus Zyklus 11 das zehnte Datenpaket Data Cycle 10 mit den vier Datenfelder D101-D104, für den dreizehnten Übertragungszyklus Zyklus 12 das elfte Datenpaket Data Cycle 11 mit den vier Datenfelder D111-D114 und für den vierzehnten Übertragungszyklus Zyklus 13 das zwölfte Datenpaket Data Cycle 12 mit den vier Datenfelder D121-D124. Bei der in Fig. 4 gezeigten zweiten Abfolge von Übertragungszyklen läuft dann analog zur in Fig. 3 gezeigten ersten Abfolge von Übertragungszyklen die Datenübertragung im fünften Übertragungszyklus Zyklus 4 fehlerfrei ab. Im folgenden sechsten Übertragungszyklus Zyklus 5 ist dann aber die Übertragung der sechsten Erzeuger-Dateneinheit an den Daten-Verarbeiter 2 gestört. Die fehlerhafte Übertragung der sechsten Erzeuger-Dateneinheit im sechsten Übertragungszyklus Zyklus 5 ist in Fig. 4 graphisch durch ein Blitzsymbol gekennzeichnet.

Auf die fehlerhafte Datenübertragung im sechsten Übertragungszyklus Zyklus 5 reagiert der Daten-Verarbeiter 2 im siebten Übertragungszyklus Zyklus 6, indem der Daten-Verarbeiter 2 entgegen der siebten Verarbeiter-Dateneinheit in der in Fig. 3 gezeigten ersten Abfolge im ersten Datenfeld der siebten Verarbeiter-Dateneinheit das Wiederhol-Kommando R auf den Wert 1 setzt, um anzuzeigen, dass im vorausgehenden sechsten Übertragungszyklus Zyklus 5 ein Fehler bei der Datenübertragung aufgetreten ist. Zusätzlich zeigt der Daten-Verarbeiter 2 im zweiten Datenfeld der siebten Verarbeiter-Dateneinheit als Adressenwert die zweite Ringspeicher-Adresse A2 an, unter der die fehlerhaft übertragenen Nutzdatenfelder der sechsten Erzeuger-Dateneinheit gespeichert sind.

Da der Daten-Erzeuger 3 auf Kommandos der Verarbeiter-Dateneinheit um einen Übertragungszyklus verzögert reagiert, sendet der Daten-Erzeuger 3 im siebten Übertragungszyklus Zyklus 6 in Reaktion auf die vorausgehende sechste Verarbeiter-Dateneinheit aus dem sechsten Übertragungszyklus Zyklus 5, der eine fehlerfreie Übertragung mit dem Wiederhol-Kommando R=0 angezeigt hat, erst die unter der dritten Ringspeicher-Adresse A3 gespeicherten Datenfelder mit der siebten Erzeuger-Dateneinheit, die vom Daten-Verarbeiter 2 dann fehlerfrei empfangen werden.

Der Daten-Verarbeiter 2 verschickt deshalb im achten Übertragungszyklus Zyklus 7 als achte Verarbeiter-Dateneinheit dann wieder im ersten Datenfeld das Wiederhol-Kommando R=0, das die fehlerfreie Datenübertragung der siebten Erzeuger-Dateneinheit bestätigt. Alternativ besteht auch die Möglichkeit, dass der Daten-Verarbeiter 2, solange keine fehlerfreie Übertragung der im Ringspeicher an der zweiten Ringspeicher-Adresse A2 gespeicherten Datenfelder vorliegt, die im siebten Übertragungszyklus Zyklus 6 übertragene siebte Verarbeiter-Dateneinheit, die die fehlerhafte Datenübertragung der sechsten Erzeuger-Dateneinheit mit dem Wiederhol-Kommando R=1 im ersten Datenfeld und der zweite Ringspeicher-Adresse A2 im zweiten Datenfeld anzeigt, in den weiteren Verarbeiter-Dateneinheiten wiederholt.

Im achten Datenübertragungszyklus Zyklus 7 reagiert der Daten-Erzeuger 3 auf das Wiederhol-Kommando R=1 in der siebten Verarbeiter-Dateneinheit und wiederholt die sechste Erzeuger-Dateneinheit mit der achten Erzeuger-Dateneinheit, indem die an der zweiten Ringspeicher-Adresse A2 gespeicherten Datenfelder mit den fünf Nutzdatenfeldern der achten Erzeuger-Dateneinheit übertragen werden.

Im neunten Übertragungszyklus Zyklus 8 wird dann die Datenübertragung regulär fortgesetzt, wobei aufgrund der im achten Übertragungszyklus Zyklus 7 erfolgten Wiederholung des sechsten Übertragungszyklus Zyklus 5 in der in Fig. 4 gezeigten zweiten Abfolge eine Datenübertragung entsprechend dem achten Übertragungszyklus Zyklus 7 der in Fig. 3 gezeigten ersten Abfolge erfolgt, bei dem die an der fünften Ringspeicher-Adresse A5 gespeicherten Datenfelder mit den fünf Nutzdatenfeldern der neunten Erzeuger-Dateneinheit übertragen werden.

Der erste Kommunikationszyklus ist damit abgeschlossen, wobei der redundante neunte Übertragungszyklus Zyklus 8 im Gegensatz zur in Fig. 3 gezeigten ersten Abfolge aufgrund der Wiederholung der fehlerhaften Übertragung im siebten Übertragungszyklus Zyklus 6 in der in Fig. 4 gezeigten zweiten Abfolge zur Nutzdatenübertragung im ersten Kommunikationszyklus verwendet wird, die von dem Daten-Verarbeiter 2 verarbeitet werden.

Bei der in Fig. 4 gezeigten zweiten Abfolge läuft dann der zehnte Übertragungszyklus Zyklus 9 analog zu der in Fig. 3 gezeigten ersten Abfolge wieder fehlerfrei ab. In der in Fig. 4 gezeigten zweiten Abfolge tritt dann aber im elften Übertragungszyklus Zyklus 10 wiederum ein Fehler bei der Übertragung der elften Erzeuger-Dateneinheit auf, was mit einem weiteren Blitzsymbol angezeigt ist.

Der Daten-Verarbeiter 2 reagiert auf diesen weiteren Übertragungsfehler im zwölften Übertragungszyklus Zyklus 11 mit der zwölften Verarbeiter-Dateneinheit, die im ersten Datenfeld das Wiederhol-Kommando R=1 und im zweiten Datenfeld die Ringspeicher-Adresse A6 der vorausgehenden fehlerhaft übertragenen elften Erzeuger-Dateneinheit anzeigt.

Die Daten-Erzeugereinheit 3 wiederholt die elfte Erzeuger-Dateneinheit aus dem elften Übertragungszyklus Zyklus 10 als dreizehnte Erzeuger-Dateneinheit im dreizehnten Übertragungszyklus Zyklus 12. Der vierzehnte Übertragungszyklus Zyklus 13 schließt dann den zweiten Kommunikationszyklus mit der verschobenen Übertragung der an der achten Ringspeicher-Adresse A8 gespeicherten Datenfelder ab.

Wie der zweite Ablauf in Fig. 4 zeigt, kann also in jedem Kommunikationszyklus mit dem einen redundanten Übertragungszyklus eine Übertragungs-Wiederholung bei einer fehlerhaften Datenübertragung in einem der anderen Übertragungszyklen ausgeführt werden.

Bei dem in Fig. 3 und Fig. 4 gezeigten Beispiel übersteigt die in einem Übertragungszyklus übertragbare erste Datenmenge die von dem Daten-Erzeuger 3 für einen Übertragungszyklus erzeugte zweite Datenmenge um ein Viertel, prozentual ausgedrückt um 25%. Grundsätzlich können die erste Datenmenge und die zweite Datenmenge so aufeinander abgestimmt sein, dass der prozentuale Anteil, um den die erste Datenmenge die zweite Datenmenge übersteigt, n-fach multipliziert der zweiten Datenmenge entspricht, wobei n eine ganze Zahl größer 1 ist. Die Bandbreite des Kommunikationszyklus im Datenübertragungssystem beträgt n+1 Übertragungszyklen, wobei einer der n+1 Übertragungszyklen redundant in Bezug auf die Übertragung der von dem Daten-Erzeuger 3 für die n+1 Übertragungszyklen bereitgestellten Datenmenge ist und für die Wiederholung der Übertragung von Daten aus einem als fehlerhaft erkannten Übertragungszyklus genutzt werden kann.

Es ist jedoch nicht unbedingt erforderlich, dass der prozentuale Anteil, um den die erste Datenmenge die zweite Datenmenge übersteigt, n-fach multipliziert genau der zweiten Datenmenge entspricht. Die Bandbreite des Kommunikationszyklus im Datenübertragungssystem ist dann die Anzahl von Übertragungszyklen, die benötigt wird, um mit der ersten Datenmenge zusätzlich zu der in jedem Übertragungszyklus übertragenen zweiten Datenmenge eine weitere zweite Datenmenge zu übertragen, ergänzt um einen weiteren Übertragungszyklus. In jedem Kommunikationszyklus ist dann immer ein Übertragungszyklus redundant, der es ermöglicht, Daten aus einem als fehlerhaft erkannten Übertragungszyklus nochmals zu übertragen.

Im in Fig. 3 und Fig. 4 gezeigten Beispiel verwirft der Daten-Verarbeiter 2 die in einem Übertragungszyklus vom Daten-Erzeuger 3 empfangenen Daten, wenn der Daten-Erzeuger 3 in dem Übertragungszyklus weniger als die erste Datenmenge überträgt. Diese Vorgehensweise, verhindert, dass der Daten-Verarbeiter 2 die bei einer fehlerfreien Übertragung in einem Kommunikationszyklus durch den redundanten Übertragungszyklus doppelt übertragenen Daten zweimal verarbeitet.

Das Verhalten des Daten-Verarbeiters 2 wird dabei mit Hilfe des Übertragungsstatus-Kommandos F gesteuert, das mit dem Wert O anzeigt, dass die Nutzdatenfelder der Erzeuger-Dateneinheit nicht vollständig mit Daten belegt sind, und das mit dem Wert 1 anzeigt, dass die Nutzdatenfelder der Erzeuger-Dateneinheit vollständig mit Daten belegt sind. Alternativ kann das Übertragungsstatus-Kommando F auch als Wert immer die genaue Anzahl der belegten Nutzdatenfelder der Erzeuger-Dateneinheit angeben, die der Daten-Verarbeiter 2 dann auswertet.

Grundsätzlich muss sichergestellt werden, dass der Daten-Verarbeiter 2 dann, wenn Daten in einem Kommunikationszyklus mehrfach empfangen werden, diese Daten nur einmal verarbeitet. Der Daten-Verarbeiter 2 muss dabei feststellen, ob die in einem Übertragungszyklus vom Daten-Erzeuger 3 empfangenen Daten bereits aus einem vorausgehenden Übertragungszyklus bekannt sind und dem Daten-Verarbeiter 2 vorliegen. Der Daten-Verarbeiter 2 verwirft dann entweder die bereits vorliegenden Daten oder die nochmals empfangenen Daten.

Zusätzlich zur Möglichkeit einer durch den Daten-Verarbeiter 2 gesteuerten Wiederholung eines fehlerhaften übertragenen Erzeuger-Dateneinheit durch den Daten-Erzeuger 3 mit dem Wiederhol-Kommando R=0 in der Verarbeiter-Dateneinheit kann der Daten-Verarbeiter 2 mit der Verarbeiter-Dateneinheit weitere Kommandos übertragen, die die in einem Übertragungszyklus vom Daten-Erzeuger erzeugte Datenmenge, d.h., die die Anzahl der Datenfelder in vom Daten-Erzeuger bereitgestellten Datenpaket Data Cycle verändern.

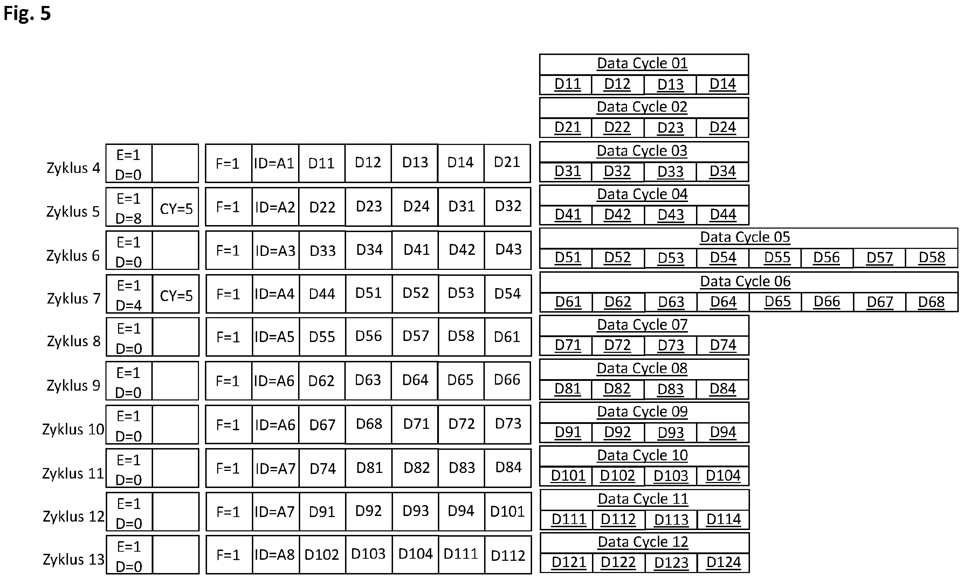

In Fig. 5 ist eine dritte Abfolge von Übertragungszyklen gezeigt, die mit der in Fig. 4 gezeigten zweiten Abfolge übereinstimmt. In Fig. 5 sind dann wieder zehn Übertragungszyklen dargestellt, die zwei Kommunikationszyklen abbilden. Bei der in Fig. 5 gezeigten dritten Abfolge fehlen auch die ersten vier Übertragungszyklen Zyklus 0 bis 3 der in Fig. 3 gezeigten ersten Abfolge. In Fig. 5 sind wie in Fig. 4 nur die fünften bis viertzehnten Übertragungszyklen Zyklus 4 bis 13 dargestellt. Ferner sind in Fig. 5 auch die vom Daten-Erzeuger 3 bereitgestellten ersten bis zwölften Datenpakete Data Cycle 1-12 gezeigt.

Im Gegensatz zur zweiten Abfolge wird bei der dritten Abfolge analog zur ersten Abfolge davon ausgegangen, dass alle Datenübertragungen fehlerfrei durchgeführt werden. Alle Verarbeiter-Dateneinheiten der in der in Fig. 5 gezeigten dritten Abfolge enthalten deshalb das Wiederhol-Kommando R=0 im ersten Datenfeld, was jedoch aus Übersichtlichkeitsgründen in Fig. 5 nicht in das erste Datenfeld der Verarbeiter-Dateneinheiten eingetragen ist.

Zusätzlich enthält das erste Datenfeld der Verarbeiter-Dateneinheit das Daten-Kommando D, mit dem die Anzahl der vom Daten-Erzeuger 3 zu erzeugenden Datenfelder in einem Datenpaket Data Cycle verändert werden kann. Der Wert 0 des Daten-Kommandos D zeigt dabei an, dass keine Veränderung der vom Daten-Erzeuger 3 zu erzeugenden Anzahl von Datenfeldern im Datenpaket Data Cycle vorgenommen werden soll. Eine von 0 verschiedene ganzzahlige Zahl des Daten-Kommandos D wird dagegen vom Daten-Erzeuger 3 dahingehend interpretiert, dass eine dem Wert entsprechende Anzahl von Datenfeldern im Datenpaket Data Cycle bereitgestellt werden sollen.

Wie bei den in Fig. 3 und Fig. 4 gezeigten ersten und zweiten Abfolgen ist der Daten-Erzeuger 3 auch in der in Fig. 5 gezeigten dritten Abfolge so voreingestellt, dass der Daten-Erzeuger 3 für jeden Übertragungszyklus ein Datenpaket Data Cycle mit vier Datenfeldern bereitstellt.

Der erste Kommunikationszyklus startet bei der in Fig. 5 gezeigten dritten Abfolge analog zur in Fig. 4 gezeigten zweiten Abfolge mit dem fünften Übertragungszyklus Zyklus 4, wobei im ersten Datenfeld der fünften Verarbeiter-Dateneinheit mit dem Wert 0 für das Daten-Kommando D angezeigt ist, dass keine Veränderung der pro Übertragungszyklus vom Daten-Erzeuger 3 bereitgestellten Anzahl von Datenfeldern im Datenpaket Data Cycle durchgeführt werden soll.

Im sechsten Übertragungszyklus Zyklus 5 zeigt der Daten-Verarbeiter 2 dann im ersten Datenfeld der sechsten Verarbeiter-Dateneinheit mit dem Wert 8 für das Daten-Kommando D an, dass die Anzahl der Datenfelder, die vom Daten-Erzeuger pro Übertragungszyklus bereitgesellt werden sollen, von vier Datenfeldern auf acht Datenfelder erhöht werden soll. Im zweiten Datenfeld der sechsten Verarbeiter-Dateneinheit gibt der Daten-Verarbeiter 2 dann weiter an, ab welcher Datenpaket-Nummer CY, im vorliegenden Fall ab dem Datenpaket Data Cycle mit der Nummer 5 die Datenfeldzahl-Erhöhung umgesetzt werden soll.

Der Daten-Erzeuger 3 stellt dann aufgrund der um einen Übertragungszyklus verzögerten Auswertung des Daten-Kommandos D=8 der sechsten Verarbeiter-Dateneinheit für den achten Übertragungszyklus Zyklus 7 das fünfte Datenpaket Data Cycle 5 statt mit bisher vier Datenfeldern dann mit achte Datenfeldern D51-D58 bereit.

Im siebten Übertragungszyklus Zyklus 6 zeigt der Daten-Verarbeiter 2 dann im ersten Datenfeld der siebten Verarbeiter-Dateneinheit mit dem Wert 0 für das Daten-Kommando D an, dass keine weitere Veränderung der pro Übertragungszyklus vom Daten-Erzeuger 3 bereitgestellten Anzahl von Datenfeldern im Datenpaket Data Cycle durchgeführt werden soll. Der Daten-Erzeuger 3 stellt deshalb für den neunten Übertragungszyklus Zyklus 8 das sechste Datenpaket Data Cycle 5 wiederum mit achten Datenfeldern D61-D68 bereit.

Wie der in Fig. 5 gezeigten dritten Abfolge zu entnehmen ist, senkt der Daten-Verarbeiter 2 in dem achten Übertragungszyklus Zyklus 7 dann die vom Daten-Erzeuger 3 zu erzeugende Anzahl von Datenfelder pro Übertragungszyklus wieder auf vier Datenfelder ab, indem als Wert für das Daten-Kommando D der Wert 4 in das erste Datenfeld der achten Verarbeiter-Dateneinheit eingetragen ist. Im zweiten Datenfeld der achten Verarbeiter-Dateneinheit gibt der Daten-Verarbeiter 2 dann weiter mit der Datenpaket-Nummer CY=7 an, dass der Daten-Erzeuger 3 mit dem siebten Datenpaket Data Cycle 7 dann wieder statt acht Datenfelder nur noch vier Datenfelder zur Verfügung stellen soll.

Der Daten-Erzeuger 3 stellt dann aufgrund der um einen Übertragungszyklus verzögerten Auswertung des Daten-Kommandos D=8 der achten Verarbeiter-Dateneinheit für den neunten Übertragungszyklus Zyklus 9 das siebte Datenpaket Data Cycle 7 wieder vier Datenfeldern statt mit achte Datenfeldern bereit.

Die auf vier Datenfelder eingestellte Datenfelder-Erzeugungsrate wird dann in der in Fig. 5 gezeigten dritten Abfolge durch den Daten-Verarbeiter 2 beibehalten, in dem der Daten-Verarbeiter 2 mit dem Wert 0 für das Daten-Kommando D in den weiteren Verarbeiter-Dateneinheiten eine unveränderte Aufrechterhaltung der Datenfelder-Erzeugungsrate anzeigt.

Im in Fig. 2 gezeigten Ringspeicher des Daten-Erzeugers 3 sind in der in Fig. 5 gezeigten dritten Abfolge gegenüber der in Fig. 4 gezeigten zweiten Abfolge dann zusätzlich acht weitere Datenfelder aus der erhöhten Datenfelder-Erzeugungsrate des Daten-Erzeugers 3 für den siebten Übertragungszyklus Zyklus 6 mit dem fünften Datenpaket Data Cycle 5 und für den achten Übertragungszyklus Zyklus 7 mit dem sechsten Datenpaket Data Cycle 6 gespeichert. Diese acht weiteren Datenfelder D55-D58, D65-D68 werden mit den zwei zusätzlichen redundanten Übertragungszyklen des ersten und zweiten Kommunikationszyklus vom Daten-Erzeuger 3 zum Daten-Verarbeiter 2 übertragen werden.

Mit dieser Vorgehensweise besteht die Möglichkeit, flexibel die Daten-Erzeugung zu steuern. Erforderlich ist dabei, dass der Ringspeicher des Daten-Erzeugers 3 ausreichend Speicherkapazität zur Aufnahme von Datenfeldern, die noch nicht übertragen worden sind, aufweist. Vorteilhaft ist diese Vorgehensweise insbesondere dann, wenn der Daten-Verarbeiter 2 die Nutzdaten des Daten-Erzeugers 3 mit einer höheren Totzeit verarbeitet.

## Patentansprüche

1. Verfahren zum zyklischen Übertragen von Daten zwischen Kommunikationsteilnehmern auf einem Datenübertragungskanal (1),
wobei der Datenübertragungskanal (1) mit einer Datenübertragungsrate betrieben wird, mit der in jedem Übertragungszyklus eine erste Datenmenge übertragbar ist,
wobei ein Kommunikationsteilnehmer als Daten-Verarbeiter (2) und ein weiterer Kommunikationsteilnehmer als Daten-Erzeuger (3) wirkt,
wobei der Daten-Erzeuger (3) für jeden Übertragungszyklus eine zweite Datenmenge zur Verfügung stellt,
wobei die erste Datenmenge die zweite Datenmenge um einen prozentualen Anteil übersteigt, wobei der prozentuale Anteil, um den die erste Datenmenge die zweite Datenmenge übersteigt, n-fach multipliziert wenigstens der zweiten Datenmenge entspricht, wobei n eine ganze Zahl größer 1 ist,
wobei der Daten-Erzeuger (3) die vom Daten-Erzeuger (3) für einen Kommunikationszyklus aus n+1 Übertragungszyklen zur Verfügung gestellten n+1 ersten Datenmengen mit der Datenübertragungsrate des Datenübertragungskanals (1) zum Daten-Verarbeiter (2) so übertragt, dass die von dem Daten-Erzeuger (3) für den Kommunikationszyklus aus n+1 Übertragungszyklen bereitgestellten n+1 ersten Datenmengen in n Übertragungszyklen mit n zweiten Datenmengen auf dem Datenübertragungskanal (1) übertragen werden, so dass ein Übertragungszyklus der n+1 Übertragungszyklen des Kommunikationszyklus auf dem Datenübertragungskanal (1) mit der zweiten Datenmenge redundant in Bezug auf eine Übertragung der Daten der von dem Daten-Erzeuger (3) für die n+1 Übertragungszyklen des Kommunikationszyklus bereitgestellten n+1 ersten Datenmengen ist und für eine Wiederholung der Übertragung der zweiten Datenmenge aus einem als fehlerhaft angezeigten Übertragungszyklus der bereits ausgeführten Übertragungszyklen auf dem Datenübertragungskanal (1) genutzt werden kann,
wobei der Daten-Verarbeiter (2) die vom Daten-Erzeuger (3) auf dem Datenübertragungskanal (1) empfangenen Daten um die Anzahl von Übertragungszyklen verzögert verarbeitet, die der Daten-Erzeuger (3) braucht, um auf eine Kommando des Daten-Verarbeiters (2) zu reagieren,
wobei der Daten-Verarbeiter (2) dem Daten-Erzeuger (3) mit einem Wiederhol-Kommando einen Übertragungszyklus als fehlerhaft anzeigt, wenn ein Fehler bei der Datenübertragung in dem Übertragungszyklus aufgetreten ist,
wobei der Daten-Erzeuger (3) bei Empfang des Wiederhol-Kommandos die Datenübertragung des vom Daten-Verarbeiter (2) als fehlerhaft angezeigten Übertragungszyklus in dem Kommunikationszyklus wiederholt.

2. Verfahren nach Anspruch 1, wobei der prozentuale Anteil, um den die erste Datenmenge die zweite Datenmenge übersteigt, n-fach multipliziert der zweiten Datenmenge entspricht, wobei n eine ganze Zahl größer 1 ist, und
wobei der Daten-Verarbeiter (2) die in einem Übertragungszyklus vom Daten-Erzeuger (3) empfangenen Daten verwirft, wenn der Daten-Erzeuger (3) in dem Übertragungszyklus weniger als die erste Datenmenge überträgt.

3. Verfahren nach Anspruch 1 oder 2, wobei in jedem Übertragungszyklus der Daten-Verarbeiter (2) jeweils eine Verarbeiter-Dateneinheit sendet, auf die der Daten-Erzeuger (3) im jeweiligen Übertragungszyklus mit einer Erzeuger-Dateneinheit antwortet, wobei die Verarbeiter-Dateneinheit ein Datenelement enthält, mit dem das Wiederhol-Kommando übertragen wird.

4. Verfahren nach Anspruch 3, wobei im Rahmen einer Initialisierungssequenz die Totzeit, die der Anzahl von Übertragungszyklen entspricht, die der Daten-Erzeuger (3) braucht, um auf ein Kommando des Daten-Verarbeiters (2) zu reagieren, ermittelt wird, wobei der Daten-Verarbeiter (2) in aufeinanderfolgenden Verarbeiter-Dateneinheiten der Initialisierungssequenz eine Datenwertfolge bereitgestellt, bei der jedem Übertragungszyklus der Initialisierungssequenz ein individueller Datenwert zugeordnet ist, wobei der Daten-Erzeuger (3) den Datenwert nach dem Erfassen in die nächste an den Daten-Verarbeiter (2) versandte Erzeuger-Dateneinheit einträgt.

5. Verfahren nach Anspruch 4, wobei die Verarbeiter-Dateneinheit ein Datenelement enthält, mit dem ein Betriebsstatus-Kommando übertragen wird, das anzeigt, dass der Übertragungszyklus Teil einer Initialisierungssequenz oder Teil einer Datenübertragungssequenz ist.

6. Verfahren nach einem der Ansprüche 3 bis 5, wobei die Verarbeiter-Dateneinheit ein Datenelement enthält, mit dem ein Daten-Kommando übertragen wird, mit dem die vom Daten-Erzeuger (3) in einem Übertragungszyklus erzeugte zweite Datenmenge veränderbar ist.

7. Verfahren nach einem der Ansprüche 3 bis 6, wobei die Erzeuger-Dateneinheit ein Datenelement enthält, mit dem ein Übertragungsstatus-Kommando übertragen wird, das anzeigt, ob die in der Erzeuger-Dateneinheit für Nutzdaten vorgesehenen Datenelemente vollständig mit Nutzdaten belegt sind, oder alternativ wobei die Erzeuger-Dateneinheit ein Datenelement enthält, mit dem ein Übertragungsstatus-Kommando übertragen wird, das in der Erzeuger-Dateneinheit die Anzahl der mit Nutzdaten belegten Datenelemente anzeigt.

8. Datenübertragungssystem zum zyklischen Übertragen von Daten zwischen Kommunikationsteilnehmern auf einem Datenübertragungskanal (1) in einem Kommunikationszyklus,
wobei der Datenübertragungskanal (1) auslegt ist, mit einer Datenübertragungsrate betrieben zu werden, mit der in jedem Übertragungszyklus eine erste Datenmenge übertragbar ist, wobei ein Kommunikationsteilnehmer als Daten-Verarbeiter (2) und ein weiterer Kommunikationsteilnehmer als Daten-Erzeuger (3) wirkt,
wobei der Daten-Erzeuger (3) ausgelegt ist, für jeden Übertragungszyklus eine zweite Datenmenge zur Verfügung zu stellen,
wobei die erste Datenmenge die zweite Datenmenge um einen prozentualen Anteil übersteigt, wobei der prozentuale Anteil, um den die erste Datenmenge die zweite Datenmenge übersteigt, n-fach multipliziert wenigstens der zweiten Datenmenge entspricht, wobei n eine ganze Zahl größer 1 ist,
wobei der Daten-Erzeuger (3) ausgelegt ist, die vom Daten-Erzeuger (3) für einen Kommunikationszyklus aus n+1 Übertragungszyklen zur Verfügung gestellten n+1 ersten Datenmengen mit der Datenübertragungsrate des Datenübertragungskanals (1) zum Daten-Verarbeiter (2) so zu übertragen, dass die von dem Daten-Erzeuger (3) für den Kommunikationszyklus aus n+1 Übertragungszyklen bereitgestellten n+1 ersten Datenmengen in n Übertragungszyklen mit n zweiten Datenmengen auf dem Datenübertragungskanal (1) übertragen werden, so dass ein Übertragungszyklus der n+1 Übertragungszyklen des Kommunikationszyklus auf dem Datenübertragungskanal (1) mit der zweiten Datenmenge redundant in Bezug auf eine Übertragung der Daten der von dem Daten-Erzeuger (3) für die n+1 Übertragungszyklen des Kommunikationszyklus bereitgestellten n+1 ersten Datenmengen ist und für eine Wiederholung der Übertragung der zweiten Datenmenge aus einem als fehlerhaft angezeigten Übertragungszyklus der bereits ausgeführten Übertragungszyklen auf dem Datenübertragungskanal (1) genutzt werden kann,
wobei der Daten-Verarbeiter (2) ausgelegt ist, die vom Daten-Erzeuger (3) auf dem Datenübertragungskanal (1) empfangenen Daten um die Anzahl von Übertragungszyklen verzögert zu verarbeiten, die der Daten-Erzeuger (3) braucht, um auf eine Kommando des Daten-Verarbeiters (2) zu reagieren,
wobei der Daten-Verarbeiter (2) ausgelegt ist, dem Daten-Erzeuger (3) mit einem Wiederhol-Kommando einen Übertragungszyklus als fehlerhaft anzuzeigen, wenn ein Fehler bei der Datenübertragung in dem Übertragungszyklus aufgetreten ist,
wobei der Daten-Erzeuger (3) ausgelegt ist, bei Empfang des Wiederhol-Kommandos die Datenübertragung des vom Daten-Verarbeiter (2) als fehlerhaft angezeigten Übertragungszyklus in dem Kommunikationszyklus zu wiederholen.

9. Datenübertragungssystem nach Anspruch 8, wobei der prozentuale Anteil, um den die erste Datenmenge die zweite Datenmenge übersteigt, n-fach multipliziert der zweiten Datenmenge entspricht, wobei n eine ganze Zahl größer 1 ist, und
wobei der Daten-Verarbeiter (2) ausgelegt ist, die in einem Übertragungszyklus vom Daten-Erzeuger (3) empfangenen Daten zu verwerfen, wenn der Daten-Erzeuger (3) in dem Übertragungszyklus weniger als die erste Datenmenge überträgt.

10. Datenübertragungssystem nach Anspruch 8 oder 9, wobei der Daten-Verarbeiter (2) ausgelegt ist, in jedem Übertragungszyklus jeweils eine Verarbeiter-Dateneinheit zu versenden, auf die der Daten-Erzeuger (3) im jeweiligen Übertragungszyklus mit einer Erzeuger-Dateneinheit antwortet, wobei die Verarbeiter-Dateneinheit ein Datenelement enthält, mit dem das Wiederhol-Kommando übertragen wird.

11. Datenübertragungssystem nach Anspruch 10, wobei im Rahmen einer Initialisierungssequenz die Totzeit, die der Anzahl von Übertragungszyklen entspricht, die der Daten-Erzeuger (3) braucht, um auf ein Kommando des Daten-Verarbeiters (2) zu reagieren, ermittelt wird, wobei der Daten-Verarbeiter (2) ausgelegt ist, in aufeinanderfolgenden Verarbeiter-Dateneinheiten der Initialisierungssequenz eine Datenwertfolge bereitzustellen, bei der jedem Übertragungszyklus der Initialisierungssequenz ein individueller Datenwert zugeordnet ist, wobei der Daten-Erzeuger (3) den Datenwert nach dem Erfassen im die nächste an Daten-Verarbeiter (2) versandte Erzeuger-Dateneinheit einträgt.

12. Datenübertragungssystem nach Anspruch 11, wobei der Daten-Verarbeiter (2) ausgelegt ist, in die Verarbeiter-Dateneinheit ein Datenelement einzutragen, mit dem ein Betriebsstatus-Kommando übertragen wird, das anzeigt, dass der Übertragungszyklus Teil einer Initialisierungssequenz oder Teil einer Datenübertragungssequenz ist.

13. Datenübertragungssystem nach einem der Ansprüche 10 bis 12, wobei der Daten-Verarbeiter (2) ausgelegt ist, in die Verarbeiter-Dateneinheit ein Datenelement einzutragen, mit dem ein Daten-Kommando übertragen wird, mit dem die vom Daten-Erzeuger (3) in einem Übertragungszyklus erzeugte zweite Datenmenge veränderbar ist.

14. Datenübertragungssystem nach einem der Ansprüche 10 bis 13, wobei der Daten-Erzeuger (3) ausgelegt ist, in die Erzeuger-Dateneinheit ein Datenelement einzutragen, mit dem ein Übertragungsstatus-Kommando übertragen wird, das anzeigt, ob die in der Erzeuger-Dateneinheit für Nutzdaten vorgesehenen Datenelemente vollständig mit Nutzdaten belegt sind, oder alternativ wobei der Daten-Erzeuger (3) ausgelegt ist, in die Erzeuger-Dateneinheit ein Datenelement einzutragen, mit dem ein Übertragungsstatus-Kommando übertragen wird, das in der Erzeuger-Dateneinheit die Anzahl der mit Nutzdaten belegten Datenelemente anzeigt.

15. Datenübertragungssystem nach einem der Ansprüche 8 bis 14, wobei der Daten-Erzeuger (3) einen Zwischenspeicher zum Aufnehmen der erzeugten zweiten Datenmenge in Form eines Ringspeichers aufweist.

## Claims

1. Method for cyclically transmitting data between communication subscribers on a data transmission channel (1),
wherein the data transmission channel (1) is operated with a data transmission rate with which a first amount of data is transmissible in each transmission cycle,
wherein one communication subscriber acts as a data processor (2) and a further communication subscriber acts as a data generator (3),
wherein the data generator (3) provides a second amount of data for each transmission cycle,
wherein the first amount of data exceeds the second amount of data by a percentage proportion, wherein the percentage proportion by which the first amount of data exceeds the second amount of data, multiplied n times, corresponds at least to the second amount of data, wherein n is an integer greater than 1,
wherein the data generator (3) transmits the n+1 first amounts of data provided by the data generator (3) for a communication cycle comprising n+1 transmission cycles to the data processor (2) with the data transmission rate of the data transmission channel (1) in such a way that the n+1 first amounts of data provided by the data generator (3) for the communication cycle comprising n+1 transmission cycles are transmitted in n transmission cycles with n second amounts of data on the data transmission channel (1), so that one transmission cycle of the n+1 transmission cycles of the communication cycle on the data transmission channel (1) with the second amount of data is redundant with regard to a transmission of the data of the n+1 first amounts of data provided by the data generator (3) for the n+1 transmission cycles of the communication cycle and can be utilized for a repetition of the transmission of the second amount of data from a transmission cycle indicated as erroneous from among the already executed transmission cycles on the data transmission channel (1),
wherein the data processor (2) processes the data received from the data generator (3) on the data transmission channel (1) in a manner delayed by the number of transmission cycles that the data generator (3) needs in order to react to a command of the data processor (2),
wherein the data processor (2) indicates to the data generator (3), by way of a repeat command, that a transmission cycle is erroneous if an error occurred during the data transmission in the transmission cycle,
wherein the data generator (3), upon receiving the repeat command, repeats the data transmission of the transmission cycle indicated as erroneous by the data processor (2) in the communication cycle.

2. Method according to Claim 1, wherein the percentage proportion by which the first amount of data exceeds the second amount of data, multiplied n times, corresponds to the second amount of data, wherein n is an integer greater than 1, and
wherein the data processor (2) discards the data received from the data generator (3) in a transmission cycle if the data generator (3) transmits less than the first amount of data in the transmission cycle.

3. Method according to Claim 1 or 2, wherein in each transmission cycle the data processor (2) sends a respective processor data unit, to which the data generator (3) responds with a generator data unit in the respective transmission cycle, wherein the processor data unit contains a data element used to transmit the repeat command.

4. Method according to Claim 3, wherein the dead time corresponding to the number of transmission cycles that the data generator (3) needs in order to react to a command of the data processor (2) is determined in the context of an initialization sequence, wherein, in successive processor data units of the initialization sequence, the data processor (2) provides a data value sequence in which an individual data value is assigned to each transmission cycle of the initialization sequence, wherein the data generator (3) enters the data value, after acquisition, into the next generator data unit sent to the data processor (2).

5. Method according to Claim 4, wherein the processor data unit contains a data element used to transmit an operational status command indicating that the transmission cycle is part of an initialization sequence or part of a data transmission sequence.

6. Method according to any one of Claims 3 to 5, wherein the processor data unit contains a data element used to transmit a data command with the aid of which the second amount of data generated by the data generator (3) in a transmission cycle is variable.

7. Method according to any one of Claims 3 to 6, wherein the generator data unit contains a data element used to transmit a transmission status command indicating whether the data elements provided in the generator data unit for payload data are fully occupied by payload data, or alternatively wherein the generator data unit contains a data element used to transmit a transmission status command indicating the number of data elements occupied by payload data in the generator data unit.

8. Data transmission system for cyclically transmitting data between communication subscribers on a data transmission channel (1) in a communication cycle,
wherein the data transmission channel (1) is designed to be operated with a data transmission rate with which a first amount of data is transmissible in each transmission cycle,
wherein one communication subscriber acts as a data processor (2) and a further communication subscriber acts as a data generator (3), wherein the data generator (3) is designed to provide a second amount of data for each transmission cycle,
wherein the first amount of data exceeds the second amount of data by a percentage proportion, wherein the percentage proportion by which the first amount of data exceeds the second amount of data, multiplied n times, corresponds at least to the second amount of data, wherein n is an integer greater than 1,
wherein the data generator (3) is designed to transmit the n+1 first amounts of data provided by the data generator (3) for a communication cycle comprising n+1 transmission cycles to the data processor (2) with the data transmission rate of the data transmission channel (1) in such a way that the n+1 first amounts of data provided by the data generator (3) for the communication cycle comprising n+1 transmission cycles are transmitted in n transmission cycles with n second amounts of data on the data transmission channel (1), so that one transmission cycle of the n+1 transmission cycles of the communication cycle on the data transmission channel (1) with the second amount of data is redundant with regard to a transmission of the data of the n+1 first amounts of data provided by the data generator (3) for the n+1 transmission cycles of the communication cycle and can be utilized for a repetition of the transmission of the second amount of data from a transmission cycle indicated as erroneous from among the already executed transmission cycles on the data transmission channel (1),
wherein the data processor (2) is designed to process the data received from the data generator (3) on the data transmission channel (1) in a manner delayed by the number of transmission cycles that the data generator (3) needs in order to react to a command of the data processor (2),
wherein the data processor (2) is designed to indicate to the data generator (3), by way of a repeat command, that a transmission cycle is erroneous if an error occurred during the data transmission in the transmission cycle,
wherein the data generator (3), upon receiving the repeat command, is designed to repeat the data transmission of the transmission cycle indicated as erroneous by the data processor (2) in the communication cycle.

9. Data transmission system according to Claim 8, wherein the percentage proportion by which the first amount of data exceeds the second amount of data, multiplied n times, corresponds to the second amount of data, wherein n is an integer greater than 1, and wherein the data processor (2) is designed to discard the data received from the data generator (3) in a transmission cycle if the data generator (3) transmits less than the first amount of data in the transmission cycle.

10. Data transmission system according to Claim 8 or 9, wherein the data processor (2) is designed to send in each transmission cycle a respective processor data unit, to which the data generator (3) responds with a generator data unit in the respective transmission cycle, wherein the processor data unit contains a data element used to transmit the repeat command.

11. Data transmission system according to Claim 10, wherein the dead time corresponding to the number of transmission cycles that the data generator (3) needs in order to react to a command of the data processor (2) is determined in the context of an initialization sequence, wherein, in successive processor data units of the initialization sequence, the data processor (2) is designed to provide a data value sequence in which an individual data value is assigned to each transmission cycle of the initialization sequence, wherein the data generator (3) enters the data value, after acquisition, into the next generator data unit sent to the data processor (2).

12. Data transmission system according to Claim 11, wherein the data processor (2) is designed to enter into the processor data unit a data element used to transmit an operational status command indicating that the transmission cycle is part of an initialization sequence or part of a data transmission sequence.

13. Data transmission system according to any one of Claims 10 to 12, wherein the data processor (2) is designed to enter into the processor data unit a data element used to transmit a data command with the aid of which the second amount of data generated by the data generator (3) in a transmission cycle is variable.

14. Data transmission system according to any one of Claims 10 to 13, wherein the data generator (3) is designed to enter into the generator data unit a data element used to transmit a transmission status command indicating whether the data elements provided in the generator data unit for payload data are fully occupied by payload data, or alternatively wherein the data generator (3) is designed to enter into the generator data unit a data element used to transmit a transmission status command indicating the number of data elements occupied by payload data in the generator data unit.

15. Data transmission system according to any one of Claims 8 to 14, wherein the data generator (3) comprises a buffer for holding the generated second amount of data in the form of a circular buffer.

## Revendications

1. Procédé de transmission cyclique de données entre des abonnés de communication sur un canal de transmission de données (1),
dans lequel le canal de transmission de données (1) est exploité à un débit de transmission de données auquel une première quantité de données peut être transmise dans chaque cycle de transmission,
dans lequel un abonné de communication agit en tant que processeur de données (2) et un autre abonné de communication agit en tant que générateur de données (3), dans lequel le générateur de données (3) fournit une seconde quantité de données pour chaque cycle de transmission,
dans lequel la première quantité de données dépasse la seconde quantité de données d'un certain pourcentage, le pourcentage dont la première quantité de données dépasse la seconde quantité de données, multiplié par n, correspondant au moins à la seconde quantité de données, où n est un nombre entier supérieur à 1,
dans lequel le générateur de données (3) transmet les n+1 premières quantités de données fournies par le générateur de données (3) pour un cycle de communication parmi n+1 cycles de transmission au processeur de données (2) au débit de transmission de données du canal de transmission de données (1) de telle sorte que les n+1 premières quantités de données fournies par le générateur de données (3) pour le cycle de communication parmi n+1 cycles de transmission soient transmises en n cycles de transmission avec n secondes quantités de données sur le canal de transmission de données (1), de sorte qu'un cycle de transmission des n+1 cycles de transmission du cycle de communication sur le canal de transmission de données (1) avec la seconde quantité de données est redondant par rapport à une transmission des données des n+1 premières quantités de données fournies par le générateur de données (3) pour les n+1 cycles de transmission du cycle de communication, et peut être utilisé pour une répétition de la transmission de la seconde quantité de données à partir d'un cycle de transmission indiqué comme étant erroné parmi les cycles de transmission déjà effectués sur le canal de transmission de données (1),
dans lequel le processeur de données (2) traite les données reçues en provenance du générateur de données (3) sur le canal de transmission de données (1) avec un retard correspondant au nombre de cycles de transmission dont le générateur de données (3) a besoin pour réagir à une commande du processeur de données (2),
dans lequel le processeur de données (2) indique au générateur de données (3), au moyen d'une commande de répétition, qu'un cycle de transmission est erroné lorsqu'une erreur s'est produite lors de la transmission de données dans le cycle de transmission,
dans lequel, lors de la réception de la commande de répétition, le générateur de données (3) répète la transmission de données du cycle de transmission indiqué comme étant erroné par le processeur de données (2) dans le cycle de communication.

2. Procédé selon la revendication 1, dans lequel le pourcentage dont la première quantité de données dépasse la seconde quantité de données est égal à n fois la seconde quantité de données, où n est un nombre entier supérieur à 1, et
dans lequel le processeur de données (2) rejette les données reçues en provenance du générateur de données (3) dans un cycle de transmission lorsque le générateur de données (3) transmet moins que la première quantité de données dans le cycle de transmission.

3. Procédé selon la revendication 1 ou 2, dans lequel, dans chaque cycle de transmission, le processeur de données (2) envoie une unité de données de processeur respective, à laquelle le générateur de données (3) répond dans le cycle de transmission respectif par une unité de données de générateur, l'unité de données de processeur contenant un élément de données permettant de transmettre la commande de répétition.

4. Procédé selon la revendication 3, dans lequel, dans le cadre d'une séquence d'initialisation, le temps mort qui correspond au nombre de cycles de transmission dont le générateur de données (3) a besoin pour réagir à une commande du processeur de données (2) est déterminé, le processeur de données (2) fournissant une séquence de valeurs de données dans des unités de données de processeur successives de la séquence d'initialisation dans laquelle une valeur de données individuelle est associée à chaque cycle de transmission de la séquence d'initialisation, dans lequel, après la détection, le générateur de données (3) introduit la valeur de données dans l'unité de données de générateur suivante envoyée au processeur de données (2).

5. Procédé selon la revendication 4, dans lequel l'unité de données de processeur comprend un élément de données permettant de transmettre une commande d'état de fonctionnement qui indique que le cycle de transmission fait partie d'une séquence d'initialisation ou d'une séquence de transmission de données.

6. Procédé selon l'une des revendications 3 à 5, dans lequel l'unité de données de processeur comprend un élément de données permettant de transmettre une commande de données au moyen de laquelle la seconde quantité de données générée par le générateur de données (3) peut être modifiée lors d'un cycle de transmission.

7. Procédé selon l'une des revendications 3 à 6, dans lequel l'unité de données de générateur contient un élément de données permettant de transmettre une commande d'état de transmission qui indique si les éléments de données prévus pour des données utiles sont entièrement occupés par des données utiles dans l'unité de données de générateur, ou en variante, dans lequel l'unité de données de générateur contient un élément de données permettant de transmettre une commande d'état de transmission qui indique le nombre d'éléments de données occupés par des données utiles dans l'unité de données de générateur.

8. Système de transmission de données pour la transmission cyclique de données entre des abonnés de communication sur un canal de transmission de données (1) dans un cycle de communication,
dans lequel le canal de transmission de données (1) est conçu pour être exploité à un débit de transmission de données auquel une première quantité de données peut être transmise dans chaque cycle de transmission,
dans lequel un abonné de communication agit en tant que processeur de données (2) et un autre abonné de communication agit en tant que générateur de données (3), dans lequel le générateur de données (3) est conçu pour fournir une seconde quantité de données pour chaque cycle de transmission,
dans lequel la première quantité de données dépasse la seconde quantité de données d'un certain pourcentage, le pourcentage dont la première quantité de données dépasse la seconde quantité de données, multiplié par n, correspondant au moins à la seconde quantité de données, où n est un nombre entier supérieur à 1,
dans lequel le générateur de données (3) est conçu pour transmettre les n+1 premières quantités de données fournies par le générateur de données (3) pour un cycle de communication parmi n+1 cycles de transmission au processeur de données (2) au débit de transmission de données du canal de transmission de données (1) de telle sorte que les n+1 premières quantités de données fournies par le générateur de données (3) pour le cycle de communication parmi n+1 cycles de transmission soient transmises en n cycles de transmission avec n secondes quantités de données sur le canal de transmission de données (1), de sorte qu'un cycle de transmission des n+1 cycles de transmission du cycle de communication sur le canal de transmission de données (1) avec la seconde quantité de données est redondant par rapport à une transmission des données des n+1 premières quantités de données fournies par le générateur de données (3) pour les n+1 cycles de transmission du cycle de communication, et peut être utilisé pour une répétition de la transmission de la seconde quantité de données à partir d'un cycle de transmission indiqué comme étant erroné parmi les cycles de transmission déjà effectués sur le canal de transmission de données (1),
dans lequel le processeur de données (2) est conçu pour traiter les données reçues en provenance du générateur de données (3) sur le canal de transmission de données (1) avec un retard correspondant au nombre de cycles de transmission dont le générateur de données (3) a besoin pour réagir à une commande du processeur de données (2), dans lequel le processeur de données (2) est conçu pour indiquer au générateur de données (3), au moyen d'une commande de répétition, qu'un cycle de transmission est erroné lorsqu'une erreur s'est produite lors de la transmission de données dans le cycle de transmission,
dans lequel le générateur de données (3) est conçu, lors de la réception de la commande de répétition, pour répéter la transmission de données du cycle de transmission indiqué comme étant erroné par le processeur de données (2) dans le cycle de communication.

9. Système de transmission de données selon la revendication 8, dans lequel le pourcentage dont la première quantité de données dépasse la seconde quantité de données est égal à n fois la seconde quantité de données, où n est un nombre entier supérieur à 1, et dans lequel le processeur de données (2) est conçu pour rejeter les données reçues en provenance du générateur de données (3) dans un cycle de transmission lorsque le générateur de données (3) transmet moins que la première quantité de données dans le cycle de transmission.

10. Système de transmission de données selon la revendication 8 ou 9, dans lequel le processeur de données (2) est conçu pour envoyer, dans chaque cycle de transmission, une unité de données de processeur respective, à laquelle le générateur de données (3) répond dans le cycle de transmission respectif par une unité de données de générateur, l'unité de données de processeur contenant un élément de données permettant de transmettre la commande de répétition.

11. Système de transmission de données selon la revendication 10, dans lequel, dans le cadre d'une séquence d'initialisation, le temps mort qui correspond au nombre de cycles de transmission dont le générateur de données (3) a besoin pour réagir à une commande du processeur de données (2) est déterminé, le processeur de données (2) étant conçu pour fournir une séquence de valeurs de données dans des unités de données de processeur successives de la séquence d'initialisation dans laquelle une valeur de données individuelle est associée à chaque cycle de transmission de la séquence d'initialisation, dans lequel, après la détection, le générateur de données (3) introduit la valeur de données dans l'unité de données de générateur suivante envoyée au processeur de données (2).

12. Système de transmission de données selon la revendication 11, dans lequel le processeur de données (2) est conçu pour introduire dans l'unité de données de processeur un élément de données permettant de transmettre une commande d'état de fonctionnement qui indique que le cycle de transmission fait partie d'une séquence d'initialisation ou d'une séquence de transmission de données.

13. Système de transmission de données selon l'une des revendications 10 à 12, dans lequel le processeur de données (2) est conçu pour introduire dans l'unité de données de processeur un élément de données permettant de transmettre une commande de données au moyen de laquelle la seconde quantité de données générée par le générateur de données (3) peut être modifiée lors d'un cycle de transmission.

14. Système de transmission de données selon l'une des revendications 10 à 13, dans lequel le générateur de données (3) est conçu pour introduire dans l'unité de données de générateur un élément de données permettant de transmettre une commande d'état de transmission qui indique si les éléments de données prévus pour des données utiles sont entièrement occupés par des données utiles dans l'unité de données de générateur, ou en variante, dans lequel le générateur de données (3) est conçu pour introduire dans l'unité de données de générateur un élément de données permettant de transmettre une commande d'état de transmission qui indique le nombre d'éléments de données occupés par des données utiles dans l'unité de données de générateur.

15. Système de transmission de données selon l'une des revendications 8 à 14, dans lequel le générateur de données (3) comporte une mémoire intermédiaire sous forme de mémoire annulaire destinée à recevoir la seconde quantité de données générée.
